(19) Europäisches Patentamt
European Patent Office
Office européen des brevets

(11) EP 4 438 641 A1

(12) EUROPEAN PATENT APPLICATION
published in accordance with Art. 153(4) EPC

(43) Date of publication:
**02.10.2024 Bulletin 2024/40**

(21) Application number: **22898596.6**

(22) Date of filing: **22.11.2022**

(51) International Patent Classification (IPC):
***C08F 216/06** (2006.01)* ***C08F 8/12** (2006.01)*
***C08L 101/16** (2006.01)*

(52) Cooperative Patent Classification (CPC):
**C08F 8/12; C08F 216/06; C08L 101/16**

(86) International application number:
**PCT/JP2022/043253**

(87) International publication number:
**WO 2023/095813 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2021 JP 2021190393**

(71) Applicant: **Mitsubishi Chemical Corporation**
**Tokyo 100-8251 (JP)**

(72) Inventor: **AOYAMA Masato**
**Tokyo 100-8251 (JP)**

(74) Representative: **Vossius & Partner Patentanwälte Rechtsanwälte mbB**
**Siebertstrasse 3**
**81675 München (DE)**

# (54) MODIFIED ETHYLENE-VINYL ALCOHOL RESIN COMPOSITION, GAS BARRIER MATERIAL, AND STRETCHED FILM

(57) As a modified ethylene-vinyl alcohol resin composition having a gas-barrier property and biodegradability, improved processability, specifically stretching processability, and excellent thermal stability by appropriately reducing a crystallization rate of an ethylene-vinyl alcohol resin, provided is a modified ethylene-vinyl alcohol resin composition including: a modified ethylene-vinyl alcohol resin having 1 to 16.5 mol% of a primary hydroxy group structural unit at a side chain; and a conjugated polyene, wherein the resin composition exhibits not less than five melting peaks when subjected to differential scanning calorimetry (DSC) according to specific analysis conditions.

EP 4 438 641 A1

## Description

TECHNICAL FIELD

The present disclosure relates to a modified ethylene-vinyl alcohol resin composition, a gas-barrier material, and a stretched film.

BACKGROUND ART

Films formed from an ethylene-vinyl alcohol resin (hereinafter, also referred to as "EVOH resin") has been conventionally used for food packaging because of transparency, gas-barrier properties, flavor retention, solvent resistance, and oil resistance. The EVOH resin preferably has stretching processability for increasing the commercial value as the film for food packaging, but it is difficult to achieve the processability such as stretching because the EVOH resin exhibits a high crystallizing rate.

In addition, a multilayer structure in which the film of the EVOH resin and another resin film are laminated has a disadvantage of easy peeling between the layers if the EVOH resin film and the adjacent resin film have largely different crystallization rates to increase a difference in contraction during the formation.

As a compound for reducing the crystallization rate of a thermoplastic resin, for example, zinc, cobalt, calcium salt, etc. are known to act as a crystallization retardant for a polyamide resin. However, no compound has been known to reduce the crystallization rate for the EVOH resin.

On thermoplastic resins other than the EVOH resin, it has been tried to reduce the crystallization rate by adding an additive such as a plasticizer, but the plasticizer is not easily applied for the EVOH resin required to have gas-barrier properties because the plasticizer decreases a density in an amorphous region in the formed product.

Thus, it has been a demand for an EVOH resin having excellent processability, specifically stretching processability, by reducing the crystallization rate of the EVOH resin without adding an additive.

For example, PTL 1 discloses that crystallization behavior of an EVOH resin composition is evaluated with distinguishing crystallization due to uniform nucleus formation and crystallization due to ununiform nucleus formation by cooling from a melting state at an extremely high cooling rate with differential scanning calorimetry (DSC), and an EVOH resin composition having a low crystallization rate due to the ununiform nucleus formation exhibits excellent stability in melt-forming and appearance properties.

However, PTL 1 does not describe contribution of a component with a low crystallization rate because the evaluation method is evaluation at the extremely high cooling rate.

PTL 2 discloses that a resin having a 1 ,3-diol structural monomer unit as a primary hydroxy group at a main chain of an EVOH resin has reduced crystallinity compared with an EVOH resin not having the 1 ,3-diol structural monomer unit to improve flexibility and secondary processability, and the crystallization rate is also reduced to improve interlayer adhesiveness.

However, PTL 2 does not describe a specific index of how the crystallization rate can be reduced and how such reduction affects the processability.

NPL 1 reports that, in DSC on a polyvinyl alcohol resin having a primary hydroxy group at a side chain, the resin in a melting state is cooled and crystallized stepwise so as to include keeping the temperature at a constant temperature in the cooling, and then heated again to yield a plurality of melting peaks, and a number of repeating units of the molecular chain in a crystal lamella is tried to be determined from a difference of the melting points. It is considered that such a plurality of the melting peaks is observed because the resin is relatively slowly crystallized, not crystallized once in the crystallization process of the stepwise cooling, and the gradually crystallized products in each step reflects melting states corresponding to the step.

However, the document does not refer to the EVOH resin in which ethylene is copolymerized, and an effect by the ethylene copolymerization has never been known at all.

Further, a gas-barrier resin having an excellent biodegradability has been required in recent years from the viewpoint of reduction in environmental burden (for example, marine problems), but no EVOH resin has been known to achieve both the biodegradability and the gas-barrier property.

When a gas-barrier material is manufactured by melt-forming the EVOH resin, the resin composition is also required to have excellent thermal stability, but an EVOH resin composition having both the biodegradability and the gas-barrier property, and excellent thermal stability has not been known.

RELATED ART DOCUMENT

PATENT DOCUMENT

PTL 1: WO-A-2018/003884
PTL 2: JP-A-2014-34647

NON-PATENT DOCUMENT

NPL 1: Material (Journal of the Society of Materials Science, Japan), vol. 66, p. 23, (2017)

SUMMARY OF THE DISCLOSURE

PROBLEMS TO BE SOLVED BY THE DISCLOSURE

The present disclosure has been made in view of the above circumstances. The present disclosure provides a modified EVOH resin composition containing a modified EVOH resin having: the gas-barrier property by appropriately reducing the crystallization rate of the EVOH resin; excellent processability, specifically stretching processability; the biodegradability; and excellent thermal stability.

MEANS FOR SOLVING THE PROBLEMS

The present inventors have made earnest study, and consequently found that, with a modified EVOH resin composition containing a modified EVOH resin having a primary hydroxy group at a side chain and a conjugated polyene, the modified EVOH resin composition heated and melted by DSC, stepwise cooled and gradually crystallized so as to include several steps of keeping the temperature at a constant temperature in the cooling, and then heated again yields melting peaks corresponding to the temperature-keeping steps in the stepwise cooling, and the modified EVOH resin composition with an appropriately reduced crystallization rate can be obtained when a specific number of these melting peaks are observed. In addition, a film composed of the obtained modified EVOH resin composition exhibits specific behavior in a stress/strain curve in a tensile test at a temperature rather higher than a glass transition temperature, and thereby the film shows potential for suitable stretching process, exhibits a good gas-barrier property and biodegradability, and can achieve good thermal stability.

Specifically, the present disclosure has the following aspects.

[1] A modified EVOH resin composition, comprising:

a modified EVOH resin having a primary hydroxy group structural unit at a side chain; and
a conjugated polyene, wherein
the modified EVOH resin has an ethylene structural unit at 1 to 16.5 mol%, and
the resin composition exhibits not less than five melting peaks when subjected to differential scanning calorimetry (DSC) according to the following analysis conditions:
[Analysis Conditions]

(1) heating the modified EVOH resin composition at 10°C/min to a temperature being a melting point thereof +30°C, and then retaining a melted state at the temperature for 1 minute;
(2) cooling the modified EVOH resin composition at 10°C/min to a temperature being the melting point -10°C, and then retaining this state at the temperature for 15 minutes;
(3) cooling the modified EVOH resin composition at 10°C/min to a temperature being the melting point -20°C, and then retaining this state at the temperature for 15 minutes;
(4) cooling the modified EVOH resin composition at 10°C/min to a temperature being the melting point -30°C, and then retaining this state at the temperature for 15 minutes;
(5) cooling the modified EVOH resin composition at 10°C/min to a temperature being the melting point -40°C, and then retaining this state at the temperature for 15 minutes;
(6) cooling the modified EVOH resin composition at 10°C/min to a temperature being the melting point -50°C, and then retaining this state at the temperature for 15 minutes;
(7) cooling the modified EVOH resin composition at 10°C/min to -50°C, and then retaining this state at the

temperature for 15 minutes; and
(8) heating the modified EVOH resin composition again at 10°C/min to the temperature being the melting point +30°C,

where the melting point of the modified EVOH resin composition refers to a melting peak temperature determined in accordance with a method of performing a predetermined thermal treatment and then measuring a melting point in JIS K7121.

[2] The modified EVOH resin composition according to [1], wherein the resin composition satisfies the following formulae (1) and (2),

$$65 \geq (A)/(C)\times100 \geq 30 \ldots (1)$$

$$(A)/(C)\times100 \geq -13.5\times(D) + 95 \ldots (2)$$

wherein (D) represents a content (mol%) of the primary hydroxy group structural unit at the side chain contained in the modified EVOH resin; (A) represents a melting enthalpy of a melting peak observed at high temperature being the melting point of the modified EVOH resin composition - not less than 10°C when the resin composition is analyzed in accordance with the differential scanning calorimetry conditions; and (C) represents a melting enthalpy of an entirety of the melting peaks of the modified EVOH resin composition.
[3] The modified EVOH resin composition according to [1] or [2], wherein the resin composition satisfies the following formulae (3) and (4),

$$65 \geq (A)/(B) \ldots (3)$$

$$(A)/(B) \geq -2.3\times(D) + 9.2 \ldots (4)$$

wherein (D) represents a content (mol%) of the primary hydroxy group structural unit at the side chain contained in the modified EVOH resin; (A) represents a melting enthalpy of a melting peak observed at high temperature being the melting point of the modified EVOH resin composition - not less than 10°C when the resin composition is analyzed in accordance with the differential scanning calorimetry conditions; and (B) represents a melting enthalpy of a melting peak observed at a highest temperature within temperatures lower than a temperature being the melting point of the modified EVOH resin composition -10°C.
[4] The modified EVOH resin composition according to any of [1] to [3], wherein the conjugated polyene is contained by 0.1 to 500 ppm relative to the modified EVOH resin composition.
[5] A gas-barrier material, comprising a layer composed of the modified EVOH resin composition according to any of [1] to [4].
[6] A stretched film, comprising a layer composed of the modified EVOH resin composition according to any of [1] to [4].

EFFECTS OF THE DISCLOSURE

The modified EVOH resin composition of the present disclosure yields not less than five melting peaks when subjected to differential scanning calorimetry under specific analysis conditions because the crystallization rate is appropriately slow. Thus, the modified EVOH resin composition of the present disclosure exhibits excellent thermal stability and the biodegradability. In addition, the film formed from the modified EVOH resin of the present disclosure having the thermal stability exhibits excellent processability, specifically stretching processability, and the good gas-barrier property.

BRIEF DESCRIPTION OF DRAWINGS

FIG. 1 is a graph indicating a baseline and melting peaks in a DSC curve.
FIG. 2 is a graph indicating a border temperature between a melting peak "n-1" and a melting peak "n" in a differential curve of a DSC curve of a modified EVOH resin composition of Example 1.

FIG. 3 is a graph indicating a differential curve of a DSC curve of a modified EVOH resin composition of Comparative Example 2.
FIG. 4 is a graph indicating a DSC curve of a modified EVOH resin composition of Example 1.
FIG. 5 is a graph indicating a DSC curve of a modified EVOH resin composition of Example 2.
FIG. 6 is a graph indicating a DSC curve of an EVOH resin composition of Comparative Example 1.
FIG. 7 is a graph indicating a DSC curve of a modified EVOH resin composition of Comparative Example 2.
FIG. 8 is a graph indicating a DSC curve of a modified EVOH resin composition of Comparative Example 7.
FIG. 9 is a graph indicating a stress/strain curve of a film produced by casting a solution of the modified EVOH resin composition of Example 1.
FIG. 10 is a graph indicating a stress/strain curve of a film produced by casting a solution of the modified EVOH resin composition of Example 2.
FIG. 11 is a graph indicating a stress/strain curve of a melt-extruded single-layer film produced by forming pellets and melt-extruding the modified EVOH resin composition of Example 6.
FIG. 12 is a graph indicating a stress/strain curve of a film produced by casting a solution of the EVOH resin composition of Comparative Example 1.
FIG. 13 is a graph indicating a stress/strain curve of a film produced by casting a solution of the modified EVOH resin composition of Comparative Example 2.

## EMBODIMENTS OF THE DISCLOSURE

Hereinafter, the present disclosure will be specifically described based on examples of embodiments of the present disclosure, but the present disclosure is not limited to these embodiments.

In the present disclosure, the expression "X to Y," wherein X and Y are given numbers, encompasses a meaning of "preferably more than X" or "preferably less than Y" unless otherwise specified, in addition to a meaning of "not less than X and not more than Y."

The expression "not less than X," wherein X is a given number, or "not more than Y," wherein Y is a given number, is intended to encompass "preferably more than X" or "preferably less than Y"

Further, in the present disclosure, the expression "x and/or y," wherein X and Y are given constitutions or components, means three combinations of: only x; only y; and x and y.

A modified EVOH resin composition according to an example of an embodiment of the present disclosure (hereinafter, referred to as "the present EVOH resin composition") comprises: a modified EVOH resin having a specific amount of an ethylene structural unit and a primary hydroxy group structural unit at a side chain; and a conjugated polyene, wherein not less than five melting peaks are observed when the present EVOH resin composition is subjected to differential scanning calorimetry (DSC) under specific conditions.

Hereinafter, each component contained in the present EVOH resin composition will be described.

### Modified EVOH Resin

The EVOH resin is a thermoplastic resin typically obtained by saponifying an ethylene-vinyl ester copolymer, which is a copolymer of ethylene and a vinyl ester monomer. The EVOH resin mainly has the ethylene structural unit and the vinyl alcohol structural unit, and typically has a small amount of the vinyl ester structural unit not saponified to be remained.

The modified EVOH resin contained in the present EVOH resin composition is an EVOH resin having a primary hydroxy group at the side chain, and specifically an EVOH resin having a structural unit represented by the following general formula (1).

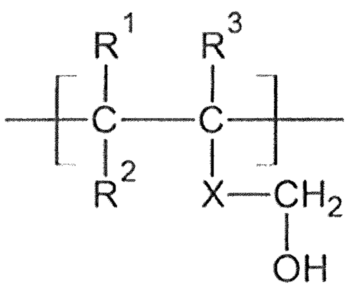 ... (1)

In the formula, $R^1$ to $R^3$ each independently represent a hydrogen atom or an organic group, and X represents

a single bond or a bonding chain.

$R^1$ to $R^3$ are not particularly limited as long as they represent a hydrogen atom or an organic group. Examples of the organic group include hydrocarbon groups such as alkyl group, alkenyl group, alkynyl group, phenyl group, and naphthyl group (these hydrocarbon groups may have hydroxy group, fluorine, chlorine, bromine, etc. as a substituent).

The bonding chain (X) to bond the polymer main chain and the primary hydroxy group structure is not particularly limited, and examples thereof include: hydrocarbons such as alkylene, alkenylene, alkynylene, phenylene, and naphthylene (these hydrocarbon groups may have hydroxy group, fluorine, chlorine, bromine, etc. as a substituent); hydrocarbons to bond the polymer main chain with an ether bond, such as oxyalkylene, oxyalkenylene, oxyalkynylene, oxyphenylene, and oxynaphthylene (these hydrocarbon groups may have hydroxy group, fluorine, chlorine, bromine, etc. as a substituent); and -CO-, $-CO(CH_2)mCO-$, $-CO(CH_2)mCOR^4-$, $-NR^5-$, and $-CONR^5-$ ($R^4$ and $R^5$ independently represent a given substituent, preferably hydrogen atom or alkyl group, and "m" represents a natural number).

Examples of a method to obtain the modified EVOH resin include:

(I) copolymerizing a monomer having a primary hydroxy group at a side chain and/or a monomer in which a primary hydroxy group at a side chain is protected with ester etc. with ethylene and a vinyl ester monomer, and then saponifying the copolymer; and
(II) saponifying in advance the copolymer of ethylene and a vinyl ester monomer to obtain the EVOH resin, and post-modifying the EVOH resin to generate the primary hydroxy group at the side chain.

Among these, the method (I) is preferable in terms of productivity.

Hereinafter, a method for manufacturing the modified EVOH resin will be described.

When the modified EVOH resin is manufactured by the method (I), ethylene, the vinyl ester monomer, and the monomer having a primary hydroxy group at a side chain and/or the monomer having a protected primary hydroxy group at a side chain with an ester etc. are copolymerized.

Examples of the vinyl ester monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate, and vinyl trifluoroacetate. These may be used singly or in combination. Among these, vinyl acetate is preferable from the economic viewpoint.

Examples of the monomer having a primary hydroxy group at a side chain include: monohydroxyalkyl-group-containing monomers such as allyl alcohol, 3-buten-1-ol, 4-penten-1-ol, 5-hexen-1-ol, 6-hepten-1-ol, and methallyl alcohol; and dihydroxyalkyl-group containing monomers such as 2-methylene-1,3-propanediol, 3,4-diol-1-butene, 4,5-diol-1-pentene, 4,5-diol-3-methyl-1-pentene, 5,6-diol-1-hexene, and glyceryl monoallyl ether. These may be used singly or in combination.

Examples of the monomer having a protected primary hydroxy group at a side chain with an ester etc. (hereinafter, also referred to as "monomer having a protected hydroxy group with ester etc.." include acetate esters of the monomer having the side-chain primary hydroxy group. Specific examples thereof include: monoacetoxyalkyl-group-containing monomers such as allyl acetate, 3-butenyl acetate, 4-pentenyl acetate, 5-hexenyl acetate, 6-heptenyl acetate, and methallyl acetate; and diacetoxyalkyl-group-containing monomers such as 2-methylene-1,3-propanediol diacetate, 3,4-diacetoxy-1-butene, 4,5-diacetoxy-1-pentene, 4,5-diacetoxy-3-methyl-1-pentene, 5,6-diacetoxy-1-hexene, 3-allyloxy-1,2-propanediol diacetate. These may be used singly or in combination.

Among the monomer having a primary hydroxy group at a side chain and the monomer having a protected hydroxy group with ester etc.., the monomer having a protected hydroxy group with ester etc. is preferable, the diacetoxyalkyl-group-containing monomer is more preferable, and 3,4-diacetoxy-1-butene and 2-methylene-1,3-propanediol diacetate are more preferable in terms of productivity.

In the method (I), a copolymerizable ethylenically unsaturated monomer may be copolymerized as a copolymerization component within a range not impairing the effect of the present disclosure (for example, not more than 10 mass% of the copolymer component).

Examples of such an ethylenically unsaturated monomer include: olefins such as propylene, 1-butene, and isobutene; unsaturated acids such as acrylic acid, methacrylic acid, crotonic acid, phthalic acid (anhydride), malic acid (anhydride), and itaconic acid (anhydride), or salt thereof or mono- or di-alkyl ester thereof, which have 1 to 18 carbon atoms; acrylamides such as acrylamide, N-alkylmethacrylamide having 1 to 18 carbon atoms, N,N-dimethylacrylamide, 2-acrylamidepropanesulfonic acid or salt thereof, acrylamidepropyldimethylamine or acid or quaternary salt thereof; methacrylamides such as N-alkylmethacrylamide, N,N-dimethylmethacrylamide, and 2-methacrylamidepropanesulfonic acid, which have 1 to 18 carbon atoms, or salt thereof; N-vinylamides such as N-vinylpyrrolidone, N-vinylformaide, and N-vinylacetamide; vinyl cyanides such as acrylonitrile and methacrylonitrile; vinyl ethers such as alkyl vinyl ether, hydroxyalkyl vinyl ether, and alkoxyalkyl vinyl ether, which have 1 to 18 carbon atoms; vinyl halides such as vinyl chloride, vinylidene chloride, vinyl fluoride, vinylidene fluoride, and vinyl bromide; and vinylsilanes. These may be used singly or in combination.

For these copolymerization reactions, known methods such as bulk polymerization, solution polymerization, suspension polymerization, dispersion polymerization, and emulsion polymerization may be adopted. Among these, the solution polymerization, which easily controls the copolymerization, is suitably used.

When the above copolymerization is performed as the solution polymerization, examples of a used solvent include: lower alcohols having 1 to 5 carbon atoms such as methanol, ethanol, 1-propanol, 2-propanol, and 1-butanol; and ketones such as acetone and 2-butanone. These may be used singly or in combination. Among these, methanol is suitably used in terms of ease of controlling the polymerization reaction. When a copolymer with a low polymerization degree is synthesized, 2-propanol is suitably used.

An amount of the used solvent may be appropriately selected with considering a target polymerization degree of the modified EVOH resin and a chain transfer constant of the solvent. When the solvent is methanol or 2-propanol, S (solvent) / M (monomer) is preferably 0.01 to 10 (mass ratio), and more preferably 0.05 to 7 (mass ratio).

As a method for feeding the copolymerization components in the solution polymerization, any methods may be adopted such as, for example, initial collective feeding, separately feeding, and continuous feeding with considering a reactivity ratio of the monomers such as a Hanna method.

A polymerization initiator is used for the above copolymerization. Examples of such a polymerization initiator include: azo initiators such as 2,2'-azobisisobutyronitrile, 2,2'-azobis(2,4-dimethylvaleronitrile), and 2,2'-azobis(4-methoxy-2,4-dimethylvaleronitrile); and peroxide initiators such as acetyl peroxide, benzoyl peroxide, lauryl peroxide, t-butyl peroxyneodecanoate, 1,1,3,3-tetramethylbutyl peroxyneodecanoate, diisopropyl peroxydicarbonate, and di-2-ethylhexyl peroxydicarbonate. These may be used singly or in combination.

An amount of the used polymerization varies depending on a type of the polymerization catalyst and cannot be decided in general, and freely selected depending on the polymerization rate. For example, when 2,2'-azobisisobutyronitrile or t-butyl peroxyneodecanoate is used, the amount is typically 10 to 2000 ppm and preferably 50 to 1000 ppm relative to the vinyl ester monomer.

A polymerization temperature of the copolymerization is preferably selected from a range from 40°C to the boiling point depending on the used solvent and an ethylene pressure.

The copolymerization may be performed in the presence of a chain transfer agent within a range not impairing the effect of the present disclosure. Examples of the chain transfer agent include: aldehydes such as acetaldehyde, propionaldehyde, and crotonaldehyde; and mercaptans such as 2-hydroxyethanethiol. These may be used singly or in combination. Among these, the aldehydes are suitably used. An amount of the added chain transfer agent in the copolymerization is decided depending on a chain transfer constant of the chain transfer agent and the target polymerization degree of the modified EVOH resin, and typically preferably 0.1 to 10 parts by mass relative to 100 parts by mass of the vinyl ester monomer.

After the copolymerization components are copolymerized, a conjugated polyene such as sorbic acid is also preferably added as a polymerization inhibitor in order to certainly terminate the reaction.

This conjugated polyene is dissolved in a washing solvent in washing the modified EVOH resin, described later, and the content of the conjugated polyene is reduced with the washing. Controlling the washing method can control the content in the modified EVOH resin. Use of the modified EVOH resin with the controlled content of the conjugated polyene can control thermal stability of the modified EVOH resin composition.

The ethylene-vinyl ester copolymer obtained as above is saponified to obtain the EVOH resin. Heating before the saponification to reduce the content of an unreacted and remained vinyl ester monomer in the solution is preferable in terms of inhibition of coloring of the obtained modified EVOH resin composition.

The saponifying method may be known methods. For example, the ethylene-vinyl ester copolymer obtained above is dissolved in an alcohol or a water-containing alcohol, and saponified in this state by using a saponification catalyst.

Examples of the alcohol include lower alcohols having 1 to 5 carbon atoms such as methanol, ethanol, and propanol. These may be used singly or in combination. Among these, methanol is preferable.

A concentration of the ethylene-vinyl ester copolymer in the alcohol is appropriately selected depending on the viscosity, and typically 5 to 60 mass%.

Examples of the saponification catalyst include: alkali catalysts such as hydroxide of alkali metal or alcoholate such as sodium hydroxide, potassium hydroxide, sodium methylate, sodium ethylate, potassium ethylate, and potassium ethylate; and acid catalysts such as sulfuric acid, hydrochloric acid, nitric acid, methanesulfonic acid, zeolite, and cation-exchanging resin.

A temperature for the saponification is not particularly limited, but preferably within a range of 20 to 140°C. As the saponification proceeds, a particle product is generated to found the reaction proceeding. When a gel product is precipitated, the product is crushed. The generated particles are washed and dried to obtain the EVOH resin.

To increase the saponification degree of the EVOH resin, preferable is secondary saponification in which byproducts (for example, vinyl acetate as the vinyl ester monomer, and methyl acetate when methanol is used as the solvent for the saponification) are removed from the once generated particles, and the product is dispersed again in an

alcohol etc., and an alkali catalyst is added to further perform the reaction.

The above saponification yields the EVOH resin in which the vinyl ester unit in the ethylene-vinyl ester copolymer is converted into the vinyl alcohol unit.

When the monomer having a protected hydroxy group with ester etc. is copolymerized by the method (I), the esters etc. of the protected monomer is simultaneously deprotected by the saponification to be converted into the side-chain primary hydroxy group structure, which yields the modified EVOH resin.

For example, when 3,4-diacetoxy-1-butene is used as the copolymerization component in the method (I), the modified EVOH resin obtained by deprotection with the saponification etc. has a primary hydroxy group represented by the following general formula (2) at the side chain.

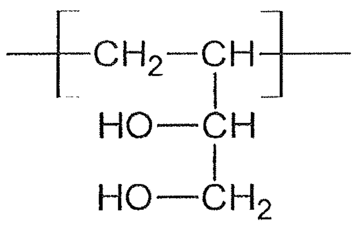

・・・(2)

For example, when 2-methylene-1,3-propanediol diacetate is used as the copolymerization component in the method (I), the obtained modified EVOH resin has a primary hydroxy group represented by the following general formula (3) at the side chain.

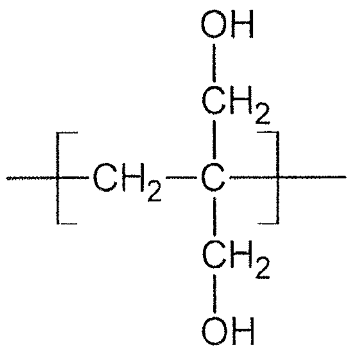

・・・(3)

The modified EVOH resin has the primary hydroxy group at the side chain, and may not be completely deprotected and may have a small amount of remained ester groups.

When the modified EVOH resin is manufactured by the method (II), for example, ethylene, the vinyl ester monomer exemplified in the method (I), and as necessary, the copolymerizable ethylenically unsaturated monomer exemplified in the method (I) are copolymerized according to the method (I), then saponified to manufacture the EVOH resin, and the obtained EVOH resin and a monovalent epoxy-group-containing compound are reacted. The reaction method is not particularly limited, and examples of preferable methods thereof include a reaction method as a solution and a reaction method in an extruder. When the reaction method in an extruder is employed, a catalyst containing ions of a metal belonging to the periodic table groups 3 to 12 is preferably used.

Preferable examples of the monovalent epoxy-group-containing compound include propylene oxide, butylene oxide, and glycidol. These may be used singly or in combination. Among these, propylene oxide is preferable.

For example, when propylene oxide is used as the monovalent epoxy-group-containing compound, the obtained modified EVOH resin has a primary hydroxy group represented by the following general formula (4) at a side chain.

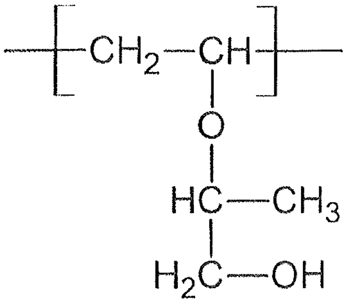

. . . (4)

The modified EVOH resin having the structural unit represented by the following general formula (1) can be obtained by the above method (I) or (II). The modified EVOH resin has the primary hydroxy group at a side chain, and may have another hydroxy group structure (a secondary hydroxy group or a tertiary hydroxy group) at the side chain.

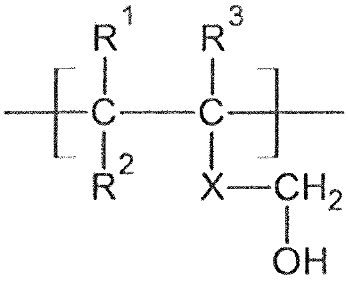

. . . (1)

In the formula, $R^1$ to $R^3$ each independently represent a hydrogen atom or an organic group, and X represents a single bond or a bonding chain.

$R^1$ to $R^3$ are not particularly limited as long as they represent a hydrogen atom or an organic group. Examples of the organic group include hydrocarbon groups such as alkyl group, alkenyl group, alkynyl group, phenyl group, and naphthyl group (these hydrocarbon groups may have hydroxy group, fluorine, chlorine, bromine, etc. as a substituent).

The bonding chain (X) to bond the polymer main chain and the primary hydroxy group structure is not particularly limited, and examples thereof include: hydrocarbons such as alkylene, alkenylene, alkynylene, phenylene, and naphthylene (these hydrocarbon groups may have hydroxy group, fluorine, chlorine, bromine, etc. as a substituent); hydrocarbons to bond the polymer main chain with an ether bond, such as oxyalkylene, oxyalkenylene, oxyalkynylene, oxyphenylene, and oxynaphthylene (these hydrocarbon groups may have hydroxy group, fluorine, chlorine, bromine, etc. as a substituent); and -CO-, $-CO(CH_2)mCO-$, $-CO(CH_2)mCOR^4-$, $-NR^5-$, and $-CONR^5-$ ($R^4$ and $R^5$ independently represent a given substituent, preferably hydrogen atom or alkyl group, and "m" represents a natural number).

A content of the ethylene structural unit in the modified EVOH resin is 1 to 16.5 mol%, preferably 3 to 15 mol%, further preferably 5 to 11 mol%, and particularly preferably 6 to 10 mol%.

An excessively low content of the ethylene structural unit raises a melting point of the modified EVOH resin to cause difficulty in melt-forming. An excessively high content of the ethylene structural unit deteriorates the gas-barrier property and tends to decrease the biodegradability.

The content of the ethylene structural unit in the modified EVOH resin can be regulated by adjusting the ethylene pressure in the copolymerization.

A content of the primary hydroxy group structural unit contained in the modified EVOH resin at the side chain is typically not less than 2.5 mol%, preferably 2.5 to 10 mol%, particularly preferably 3 to 6 mol%, and further preferably 3 to 4.5 mol%.

The content of the primary hydroxy group structural unit within the above range yields smaller crystals to facilitate flowability of the molecular chain, which tends to appropriately reduce the crystallization rate.

Meanwhile, an excessively low content of the primary hydroxy group structural unit tends to increase the crystallization rate, and consequently enlarges the crystals to tends to deteriorate the stretching processability when the EVOH resin is formed into a film. Further, not more than four of the melting peaks tend to be observed in DSC conditions described later.

An excessively high content of the primary hydroxy group structural unit tends to excessively reduce the crystallization rate to tend to fail to impart an appropriate shape during the stretching process. Further, such an excessively high content tends to collapse a balance between the ethylene structural unit and the side-chain primary hydroxy group

structural unit to deteriorate the gas-barrier property, and tends to deteriorate the biodegradability due to the decreased amount of the vinyl alcohol structural unit.

Meanwhile, an excessively high content of the primary hydroxy group structural unit requires to use a large amount of the monomer having a primary hydroxy group at a side chain and/or the monomer with a protected primary hydroxy group at a side chain with ester etc. in the manufacturing, which tends to increase the manufacturing cost.

In a case of the method (I), the content of the primary hydroxy group structural unit can be regulated by an amount of the fed monomer having a primary hydroxy group at a side chain or the monomer having a protected hydroxy group with ester etc.., which is used as the copolymerization monomer. In a case of the method (II), the content can be regulated by an amount of the used monovalent epoxy-group-containing compound used for the modification.

The modified EVOH resin has a melt flow rate (MFR) [210°C, load: 2160 g] of typically 0.1 to 100 g/10-min, preferably 1 to 50 g/10-min, and particularly preferably 3 to 35 g/10-min. An excessively high MFR tends to cause difficulty in regulating a thickness of a layer composed of the present EVOH resin composition by the melt-forming in manufacturing the gas-barrier material. An excessively low MFR tends to cause a high load to a forming apparatus in the melt-forming.

The above MFR is an indicator of the polymerization degree of the modified EVOH resin, and can be regulated by an amount of the polymerization catalyst and an amount of the solvent in copolymerizing the copolymerization components.

The saponification degree of the modified EVOH resin is typically not less than 90 mol%, preferably not less than 95 mol%, and particularly preferably not less than 99 mol%. An excessively low saponification degree tends to deteriorate the gas-barrier property.

A content of the modified EVOH resin is typically not less than 80 mass%, preferably not less than 90 mass%, and more preferably not less than 95 mass% relative to the present EVOH resin composition.

Conjugated Polyene

The conjugated polyene is a compound having a structure in which a carbon-carbon double bond and a carbon-carbon single bond are alternately linked, and a number of the carbon-carbon double bonds is two or more, so-called conjugated double bonds.

The conjugated polyene may be: a conjugated diene having a structure in which two carbon-carbon double bonds and one carbon-carbon single bond are alternately linked; a conjugated triene having a structure in which three carbon-carbon double bonds and two carbon-carbon single bonds are alternately linked; or a conjugated polyene having a structure in which not less than four of carbon-carbon double bonds and not less than three carbon-carbon single bonds are alternately linked. Note that a number of the conjugated carbon-carbon double bonds is preferably not more than seven because a number of the conjugated carbon-carbon double bonds of not less than eight tends to color the formed product due to color of the conjugated polyene itself. The conjugated double bonds composed of two or more carbon-carbon double bonds may be present at a plurality of pairs in one molecule without conjugation each other. For example, a compound having three conjugated trienes in the same molecule, such as tung oil, is also included in the conjugated polyene.

Specific examples of the conjugated polyene include: conjugated dienes composed of a conjugated structure of two carbon-carbon double bonds, such as isoprene, 2,3-dimethyl-1,3-butadiene, 2,3-diethyl-1,3-butadiene, 2-t-butyl-1,3-butadiene, 1,3-pentadiene, 2,3-dimethyl-1,3-pentadiene, 2,4-dimethyl-1,3-pentadiene, 3,4-dimethyl-1,3-pentadiene, 3-ethyl-1,3-pentadiene, 2-methyl-1,3-pentadiene, 3-methyl-1,3-pentadiene, 4-methyl-1,3-pentadiene, 1,3-hexadiene, 2,4-hexadiene, 2,5-dimethyl-2,4-hexadiene, 1,3-octadiene, 1,3-cyclopentadiene, 1,3-cyclohexadiene, 1-phenyl-1,3-butadiene, 1,4-diphenyl-1,3-butadiene, 1-methoxy-1,3-butadiene, 2-methoxy-1,3-butadiene, 1-ethoxy-1,3-butadiene, 2-ethoxy-1,3-butadiene, 2-nitro-1,3-butadiene, chloroprene, 1-chloro-1,3-butadiene, 1-bromo-1,3-butadiene, 2-bromo-1,3-butadiene, fulvene, tropone, ocimene, phellandrene, myrcene, farnesene, cembrene, sorbic acid, sorbate ester, sorbate salt, and abietic acid; conjugated trienes composed of a conjugated structure of three carbon-carbon double bonds, such as 1,3,5-hexatriene, 2,4,6-octatriene-1-carboxylic acid, eleostearic acid, tung oil, and cholecalciferol; and conjugated polyene composed of a conjugated structure of not less than four of carbon-carbon double bonds, such as cyclooctatetraene, 2,4,6,8-decatetraene-1-carboxylic acid, retinol, and retinoic acid. When the conjugated polyene has a plurality of steric isomers, such as 1,3-pentadiene, myrcene, and farnesene, any of the steric isomers may be used. The conjugated polyene may be used singly or in combination.

Among these, the conjugated polyene is preferably at least one selected from the group consisting of sorbic acid, sorbate ester, and sorbate salt, and particularly preferably sorbic acid. These conjugated polyenes may be used as a polymerization inhibitor to be added in terminating the copolymerization reaction in manufacturing the EVOH resin. Use of these conjugated polyenes as the polymerization inhibitor can certainly terminate the polymerization to tend to yield excellent operability. In addition, adding a predetermined amount of these conjugated polyenes later into the modified EVOH resin composition tends to yield excellent operability.

A content of the conjugated polyene is preferably 0.1 to 500 ppm, more preferably 0.2 to 400 ppm, particularly

preferably 0.2 to 50 ppm, and still further preferably 0.2 to 20 ppm relative to the modified EVOH resin composition. An excessively low content of the conjugated polyene tends to deteriorate the thermal stability of the modified EVOH resin composition, and for example, tends to be likely to cause gel or bump in a long-time operation for obtaining the gas-barrier material by melt-forming, described later. An excessively high content of the conjugated polyene tends to deteriorate the gas-barrier property and the biodegradability.

The conjugated polyene content may be regulated by an amount of the polymerization inhibitor added in terminating the copolymerization in manufacturing the modified EVOH resin, and a method for washing the EVOH resin, for example. The conjugated polyene content can also be regulated by adding a predetermined amount of the conjugated polyene later into the resin composition.

Other Components

Into the present EVOH resin composition, components other than the modified EVOH resin and the conjugated polyene may be blended within a range not impairing the effect of the present disclosure (for example, not more than 10 mass% of the present EVOH resin composition). Examples of the other components include thermoplastic resin other than the modified EVOH resin, plasticizer, lubricant, stabilizer, surfactant, coloring agent, UV absorber, antistatic, desiccant, crosslinker, metal salt, filler, and fiber. These may be used singly or in combination.

Method for Manufacturing the Present Modified EVOH Resin Composition

The present EVOH resin composition is manufactured by mixing the modified EVOH resin, the conjugated polyene, and as necessary other components. Examples of the manufacturing method include known methods such as a dry-blending method, a melt-mixing method, a solution-mixing method, and an immersion method, and these methods may be freely combined.

As noted above, the conjugated polyene may be contained in the modified EVOH resin by using the conjugated polyene as the polymerization inhibitor in manufacturing the modified EVOH resin.

<The Present EVOH Resin Composition>

The present EVOH resin composition obtained as above yields not less than five melting peaks in differential scanning calorimetry (DSC) according to the following analysis conditions (1) to (8),

Analysis Conditions

(1) heating the modified EVOH resin composition at 10°C/min to a temperature being a melting point thereof +30°C, and then retaining a melted state at the temperature for 1 minute;
(2) cooling the modified EVOH resin composition at 10°C/min to a temperature being the melting point -10°C, and then retaining this state at the temperature for 15 minutes;
(3) cooling the modified EVOH resin composition at 10°C/min to a temperature being the melting point -20°C, and then retaining this state at the temperature for 15 minutes;
(4) cooling the modified EVOH resin composition at 10°C/min to a temperature being the melting point -30°C, and then retaining this state at the temperature for 15 minutes;
(5) cooling the modified EVOH resin composition at 10°C/min to a temperature being the melting point -40°C, and then retaining this state at the temperature for 15 minutes;
(6) cooling the modified EVOH resin composition at 10°C/min to a temperature being the melting point -50°C, and then retaining this state at the temperature for 15 minutes;
(7) cooling the modified EVOH resin composition at 10°C/min to -50°C, and then retaining this state at the temperature for 15 minutes; and
(8) heating the modified EVOH resin composition again at 10°C/min to the temperature being the melting point +30°C,

where the melting point of the modified EVOH resin composition refers to a melting peak temperature determined in accordance with a method of performing a certain thermal treatment and then measuring a melting point in JIS K7121.

When cooled from a melting state, it is known that a resin exhibiting crystallinity typically generates a crystal nucleus at a supercooling temperature, which is slightly lower than a melting point, and then the crystal grows.

When the differential scanning calorimetry is performed in accordance with a method of performing a certain thermal treatment and then measuring a melting point described in JIS K7121, the resin is typically continuously cooled

from the melting state to a state at temperature sufficiently lower than a transition peak at a constant rate of 5°C/min or 10°C/min, and thereby a component crystallizable at this cooling rate is crystallized from the crystal nucleus. Then, heating this crystal again yields a crystal-melting peak corresponding to the crystallized portion. In this case, however, the crystallization rate of the resin cannot be determined in general from behavior of the crystal-melting peak.

In contrast to the method of continuous cooling at a constant rate, when the resin is cooled to a supercooling temperature $X_1$°C and retained at this temperature for a while, a resin with a high crystallization rete is sufficiently crystallized at this temperature for this time, but a resin with a low crystallization rate is crystallized only partially. When the cooling is restarted to cool the resin to a supercooling temperature $Y_1$°C, which is rather lower than the supercooling temperature $X_1$°C, and retained at this temperature again for a while, the resin with a high crystallization rate is newly crystallized at few amount at the supercooling temperature $Y_1$°C because the crystallization has been almost entirely completed at the supercooling temperature $X_1$°C.

In contrast, in the resin with a low crystallization rate, a portion that has not been crystallized at the supercooling temperature $X_1$°C is crystallized at the supercooling temperature $Y_1$°C.

As above, repeated procedures of gradually cooling the resin and keeping the cooling temperature for a while rapidly proceed with the crystallization at the first supercooling temperature, and the amount of the component crystallized at the subsequent supercooling temperature is reduced for the resin with a high crystallization temperature. In contrast, such repeated procedures proceed with the crystallization stepwise at each supercooling temperature for the resin with a low crystallization temperature.

When the resin is sufficiently cooled to a temperature lower than the melting point by the repeated procedures as above and heated again, the crystallization behavior in the cooling reflects to melt the crystal.

When this phenomenon is observed by DSC, crystal-melting peaks appear for reflecting the crystallization behavior in the supercooling, and in many cases, a plurality of the peaks is observed.

In this time, the cooling rate is preferably 10°C/min, similar to JIS K7121. At this cooling rate, a case if the supercooling temperature $X_1$°C is excessively lower than the melting point of the resin is unsuitable for evaluating the crystallization rate because the crystallization proceeds independently on the crystallization rate in cooling from the melting point to the supercooling temperature $X_1$°C. In addition, a temperature excessively close to the melting point also fails to observe the difference due to the crystallization rate, and thereby the supercooling temperature $X_1$°C is preferably a temperature being the melting point of the resin -10°C.

If the supercooling temperature $X_1$°C and the supercooling temperature $Y_1$°C are excessively close to each other, the peak of crystallization at the supercooling temperature $X_1$°C and the peak of crystallization at the supercooling temperature $Y_1$°C cannot be distinguished. When the supercooling temperature $X_1$°C and the supercooling temperature $Y_1$°C are 10°C apart, the difference can be observed as separated peaks. As for the retaining time at the supercooling temperature $X_1$°C, the supercooling temperature $Y_1$°C, etc., an excessively short time is insufficient for proceeding with the crystallization of the resin, and an excessively long time causes an excessively long time for measurement. Thus, the retaining time is preferably 15 minutes.

When the supercooling temperature $X_1$°C is set to be a temperature being the melting point of the resin -10°C, and the supercooling temperature $X_1$°C and the supercooling temperature $Y_1$°C are set to be 10°C apart, the supercooling temperature $Y_1$°C is "a temperature being the melting point of the resin -20°C". Suitable for evaluating the crystallization rate is repeating, after the cooling at the supercooling temperature $Y_1$°C: cooling the resin at a temperature lower than the supercooling temperature by 10°C; and retaining the resin at this constant temperature for 15 minutes with "n" steps. As for the number "n" of the repeating steps, an excessively small number is too small to distinguish the crystallization rates, and increasing the number provides the supercooling step even after the crystallizable portion is completely crystallized, which tends to require a long time for the measurement. Thus, the number of steps is preferably five.

By cooling the resin via the above five-step cooling of stepwise cooling to a temperature being the melting point of the resin -50°C and then cooling to -50°C, the resin is sufficiently cooled to a temperature lower than the melting point of the resin.

Thereafter, the resin is heated again at 10°C/min to observe the melting peak of the crystal, the peak can be judged by a method described in Example.

The resin with a high crystallization rate exhibits a large melting peak, at a temperature ($X_2$°C) higher than the supercooling temperature $X_1$°C and near the melting point, corresponding to melting of the portion crystallized at the supercooling temperature $X_1$°C. At a temperature ($Y_2$°C) lower than the supercooling temperature $X_1$°C and near the supercooling temperature $Y_1$°C, the portion crystallized at the supercooling temperature $Y_1$°C is observed as a small melting peak. At a further lower supercooling temperature, a melting peak becomes further smaller, or is not observed.

As for the size of this melting peak, the resin with a high crystallization rete has a large amount of the component crystallized at the supercooling temperature $X_1$°C, and thereby yields a large melting peak appearing at $X_2$°C. The portion crystallized at a temperature lower than or equal to the supercooling temperature $Y_1$°C is reduced, and thereby the melting peak appearing at the temperature lower than or equal to the supercooling temperature $Y_1$°C becomes relatively small. When the resin is cooled by providing the five supercooling steps to the temperature being the melting

point of the resin -50°C with every 10°C apart, a new portion crystallizable in the fifth step is absent at an undetectable degree. Therefore, in the melting peaks in heating the resin again, a number of the observed peaks is smaller than five, which is the number of the supercooling steps. That is, the resin with a high crystallization rate exhibits not more than four of the melting peaks observed in the re-heating when the five supercooling steps are provided as the above analysis conditions.

In contrast, the resin with an appropriately low crystallization rate as the modified EVOH resin used in the present disclosure exhibits a melting peak, at a temperature ($X_2$°C) higher than the supercooling temperature $X_1$°C and near the melting point, corresponding to melting of the portion crystallized at the supercooling temperature $X_1$°C. However, the component crystallized at the supercooling temperature $X_1$°C in the first step is just a part of the resin, and the resin contains a large amount of components crystallized at the supercooling temperature $Y_1$°C or a further lower supercooling temperature. Thus, in the resin with an appropriately low crystallization rate, a component crystallizable even at the supercooling temperature in the fifth step is present even in cooling the resin to a temperature being the melting point -50°C in the five steps of 10°C each. Therefore, for the resin with an appropriately low crystallization rate, five melting peaks are observed in the re-heating.

In the resin with an appropriately low crystallization rate, the crystallization may slightly proceed between the melting point and the supercooling temperature $X_1$°C, or the crystallization may be separated into two steps when there are a component that has been crystallized immediately after reaching the supercooling temperature $X_1$°C and a component that is slowly crystallized in keeping the supercooling temperature $X_1$°C. When the crystallization is separated into the two steps as above, each of melting peaks is observed as separated peaks, and two melting peaks may be observed at a temperature higher than the supercooling temperature $X_1$°C. Thus, in the resin with an appropriately low crystallization rate, the number of the supercooling steps is five but six peaks may be observed.

As above, in the resin with an appropriately low crystallization rate as the modified EVOH resin used in the present disclosure, the number of the observed melting peaks is not less than five when the five supercooling steps are provided as the above analysis conditions.

The crystallization rate of such a modified EVOH resin is affected by the content of the ethylene structural unit and the content of the side-chain primary hydroxy group structural unit, and significantly affected particularly by the content of the side-chain primary hydroxy group structural unit.

In a resin with a further lower crystallization rate, the component slowly crystallized in keeping the supercooling temperature $X_1$°C is observed as a broad melting peak at $X_2$°C, and this broad melting peak at $X_2$°C may be overlapped with the melting peak at $Y_2$°C corresponding to the crystallization in keeping the supercooling temperature $Y_1$°C to cause only not more than four of the melting peaks to be observed. Such a resin with a further lower crystallization rate tends to fail to impart an appropriate shape in the stretching process, cause poor balance between the ethylene structural unit and the side-chain primary hydroxy group structural unit to deteriorate the gas-barrier property, and deteriorate the biodegradability.

The crystallization behavior of the EVOH resin containing no conjugated polyene has been described above, but the content of the conjugated polyene contained in the present EVOH resin composition does not affect the resin crystallization, and the present EVOH resin composition can be considered similar to the above.

An area of the melting peak with the crystal melting can be determined in accordance with JIS K7122 to determine a melting enthalpy of this melting peak. In this time, when a total of melting enthalpy of peaks observed at high temperature being the melting point of the resin -10°C is specified as (A) and a melting enthalpy of the entirety of the melting peaks in an entire temperature region is specified as (C), a value of (A)/(C) becomes smaller with the resin with a low crystallization rate than the resin with a high crystallization rate. Thus, the crystallization rate can also be evaluated by this value.

The present EVOH resin composition preferably satisfies the following formulae (1) and (2),

$$65 \geq (A)/(C)\times 100 \geq 30 \ldots (1)$$

$$(A)/(C)\times 100 \geq -13.5\times(D) + 95 \ldots (2)$$

wherein (D) represents a content (mol%) of the primary hydroxy group structural unit at the side chain; (A) represents a melting enthalpy of a melting peak observed at high temperature being the melting point of the modified EVOH resin composition - not less than 10°C; and (C) represents a melting enthalpy of an entirety of the melting peaks of the modified EVOH resin composition.

The modified EVOH resin having the primary hydroxy group structural unit at the side chain has small crystals and facilitates flowability of the molecular chain, and thus reduces the crystallization rate. Therefore, the stepwise cooling as the aforementioned analysis conditions increases the component crystallized in a lower temperature region and

decreases a proportion of crystallization in a high-temperature region, and thus naturally decreases (A)/(C)×100.

In the present EVOH resin composition, (A)/(C)×100 is preferably not more than 65, and further preferably not more than 60. Such a resin composition has an appropriately slow crystallization rate because the resin crystallized at a temperature being the melting point -10°C, namely in the high-temperature region, appropriately decreases in the entire component. Thus, appropriate stretching processability described later can be imparted.

On the other hand, an excessively small (A)/(C)×100 causes the initially crystallizable component to be excessively decreased in the crystallizable component, and tends to hardly exhibit the gas-barrier property under a high-humidity condition (23°C, 65%RH) in use as the gas-barrier material. Thus, (A)/(C)×100 is preferably not less than 30, more preferably not less than 40, and further preferably not less than 45.

Further in the present EVOH resin composition, when the content (mol%) of the side-chain primary hydroxy group structural unit is specified as (D), a melting enthalpy of a peak observed at a temperature higher than the melting point of the modified EVOH resin -10°C is specified as (A), and a melting enthalpy of an entire peak of the modified EVOH resin is specified as (C), (D), (A), and (C) preferably satisfy (A)/(C)×100 ≥ -13.5×(D) + 95. If (A)/(C)×100 < -13.5×(D) + 95, the crystallization of the resin composition becomes excessively slow to cause difficulty in the melt forming.

When a melting enthalpy of a melting peak observed at a highest temperature within temperatures lower than the melting point of the resin composition - 10°C measured under the above analysis conditions is specified as (B), a ratio of (A)/(B)×100 is found to be smaller in the resin composition with a low crystallization rate than the resin composition with high crystallization.

The present EVOH resin composition preferably satisfies the following formulae (3) and (4),

$$65 \geq (A)/(B) \ldots (3)$$

$$(A)/(B) \geq -2.3\times(D) + 9.2 \ldots (4)$$

wherein (D) represents a content (mol%) of the primary hydroxy group structural unit (mol%) at the side chain contained in the modified ethylene-vinyl alcohol resin; (A) represents a melting enthalpy of a melting peak observed at high temperature not lower than the melting point of the modified EVOH resin composition - 10°C; and (B) represents a melting enthalpy of a melting peak observed at a highest temperature within temperatures lower than the melting point of the modified EVOH resin composition -10°C.

Setting to 65 ≥ (A)/(B) can keep the component crystallized at a temperature lower than the melting point -20°C while reducing the resin crystallized at a temperature being the melting point -10°C, and tends to achieve appropriate reduction in the crystallization rate. Meanwhile, if the formula (3) is not satisfied, the resin crystallized at a temperature being the melting point -10°C tends to increase to excessively increase the crystallization rate.

If the formula (4) is not satisfied, the crystallization rate of the resin is excessively low to tends to cause difficulty in the melt-forming.

Examples of methods to obtain the present modified EVOH resin having the above features include: a method of setting the content of the side-chain primary hydroxy group structural unit in the modified EVOH resin or the saponification degree to be within specific ranges; and a method of mixing EVOH resins having different melting points. These methods may be used singly or in combination. Among these, to exhibit the above features while reducing an effect on the gas-barrier property of the film, the method of setting the content of the side-chain primary hydroxy group structural unit to be within a specific range is preferable because of control ease.

A biodegrading degree of the present EVOH resin composition is preferably not less than 30%, more preferably not less than 35%, and particularly preferably not less than 40%. The biodegrading degree is determined from: a biochemical oxygen demand in a test under following conditions with reference to a method described in JIS K6950; and a theoretical oxygen demand.

- Apparatus; BOD TESTER 200F (available from TAITEC CORPORATION)
- Microbial source: Returned sludge of sewage treatment plant treating domestic sewage
- Culture solution for standard test: 100 mL
- Microbial source concentration: 90 mg/L
- Temperature: 25±1°C
- Term: 28 days

The present EVOH resin composition can be suitably used as the gas-barrier material such as a stretched film and food packaging by forming into a film. The present EVOH resin composition has the appropriately reduced crystallization rate as noted above, and thereby has excellent stretching processability when formed into a film.

To obtain a good stretching-processed product by stretching a film, it is typically important to uniformly apply a stress applied by deformation to an entire film to promote orientation of molecules.

This can be evaluated by a stress/strain curve in evaluating a tensile property of the film in accordance with JIS K7161. This prescription defines, in the tensile test, a point where a strain firstly increases without increase in a stress as an yield point, and a case where the yield point does not appear and a material exhibiting behavior of increasing both the stress and the strain (strain curing) is processed at an appropriate processing temperature is judged as excellent stretching processability.

Common EVOH resins have a high crystallization rate, and thereby have the yield point. When such EVOH resins are stretching-processed, neck stretching is used and thereby it is difficult to achieve processability, and far from the material having excellent stretching processability. In contrast, the present EVOH resin composition has small crystals as noted above, and thus facilitates flowability of the molecular chains, reduces the crystallization rate, and causes no yield point to be the material having excellent stretching processability. The reason why the present EVOH resin composition becomes the material having excellent stretching processability is unclear, but this is presumably because tension at an appropriate temperature provides situation of continuously drawing the molecules from the crystal lamella.

A processing temperature in processing the film is preferably a temperature being a glass transition temperature (Tg) of the film determined in accordance with JIS K7121 +10 to 40°C, and more preferably a temperature being Tg +10 to 30°C. Within the above temperature range, the crystal lamella of the film becomes rather weak in the tensile test with considering the definition of Tg, and an appropriate tensile force is applied for drawing the molecules from the crystal lamella to enable the drawing.

If the processing temperature of the film is lower than Tg, the film has a glass state, and the molecules are frozen and too hard to be stretched. If the processing temperature is near Tg, an amorphous portion can be stretched but the crystal lamella is still hard to be failed to draw the molecular chains, and the molecular orientation is insufficient. If the processing temperature is higher than a temperature being Tg +40°C, the crystal lamella is largely weakened and the molecular chains are slipped in tensing the film, and thus an appropriate tensile force is not applied and the molecules are not oriented.

A method for obtaining the stretched film or the gas-barrier material from the present EVOH resin composition is not particularly limited, and examples thereof include: a method (i) of applying and drying a solution of the present EVOH resin composition on a film of a substrate resin for forming a layer composed of the modified EVOH resin composition to form the stretched film or the gas-barrier material; and a method (ii) of melt-forming the present EVOH resin composition for forming a layer composed of the modified EVOH resin composition to form the stretched film or the gas-barrier material.

In the method (i), examples of a solvent used for the solution of the present EVOH resin composition include water and lower alcohols having 1 to 5 carbon atoms such as methanol, ethanol, 1-propanol, 2-propanol, 1-butanol, and 2-butanol. These may be used singly or in combination. Among these, a mixed solvent of water and 2-propanol is preferable.

A solid-content concentration in the solution of the present EVOH resin composition is typically 0.5 to 30 mass%, and preferably 5 to 20 mass%.

Examples of a method for applying the solution of the present EVOH resin composition include known methods such as a bar coater, roller coating, die coating, gravure coating, comma coating, and screen printing. Among these, a bar coater is preferable.

After the applying, the film is dried by a heating treatment etc. at, for example, 60 to 105°C for 0.5 to 10 minutes to obtain the stretched film or the gas-barrier material composed of the present EVOH resin composition.

Examples of the melt-forming method in the method (ii) include extrusion molding, injection molding, inflation molding, press molding, and blow molding.

As above, the stretched film or the gas-barrier material having the layer composed of the present EVOH resin composition is obtained. The stretched film or the gas-barrier material may be a stretched film or gas-barrier material with a single-layer structure or may be a stretched film or gas-barrier material with a multilayer structure, but the multilayer structure is preferable. The stretched film or barrier material having the multilayer structure preferably has at least one layer composed of the present EVOH resin composition. For the stretched film or the gas-barrier material with the multilayer structure, layers composed of the present EVOH resin composition may be laminated, or may be laminated with another substrate resin.

Examples of the substrate resin include: polyethylene resins such as linear low-density polyethylene, low-density polyethylene, ultralow-density polyethylene, medium-density polyethylene, high-density polyethylene, ethylene-propylene (block or random) copolymer, and ethylene-α-olefin (α-olefin having 4 to 20 carbon atoms) copolymer; polypropylene resins such as polypropylene and propylene-α-olefin (α-olefin having 4 to 20 carbon atoms) copolymer; polyolefin resins in the broad sense including (unmodified) polyolefin resins such as polybutene, polypentene, and polycyclic olefin resins (polymer having an olefin structure at at least one of a main chain or a side chain) and modified

olefin resins such as unsaturated carboxylic-acid-modified polyolefin resin in which these polyolefins are graft-modified with an unsaturated carboxylic acid or an ester thereof; ionomer, ethylene-vinyl acetate copolymer, ethylene-acrylic acid copolymer, ethylene-acrylate ester copolymer, polyester resin, polyamide resin (including copolymerized polyamide), polyvinyl chloride, polyvinylidene chloride, acrylic resin, polystyrene, vinyl ester resin, polyester elastomer, polyurethane elastomer, polystyrene elastomer, halogenated polyolefin such as chlorinated polyethylene and chlorinated polypropylene, and aromatic or aliphatic polyketone. These may be used singly or in combination. These substrate resins may be subjected to a surface treatment such as a corona treatment.

A thickness of the layer composed of the present EVOH resin composition is typically 1 to 200 μm, preferably 1 to 100 μm, and particularly preferably 1 to 50 μm. When the stretched film or the gas-barrier material has the multilayer structure, the thickness refers to a total thickness of all the layers composed of the present EVOH resin composition contained in the stretched film or the gas-barrier material.

An oxygen permeability of the layer composed of the present EVOH resin composition measured under an environment at 23°C and 0%RH is preferably, for example, not more than 5 cc·3-μm/m$^2$·day·atm, more preferably not more than 1 cc·3-μm/m$^2$·day·atm, and particularly preferably not more than 0.1 cc·3-μm/m$^2$·day·atm. A lower limit of the oxygen permeability is typically 0.003 cc·3-μm/m$^2$·day·atm. The oxygen permeability can be determined with an oxygen permeability measurement apparatus.

Since an environment where the gas-barrier material is used is broad conditions from low humidity to high humidity, the oxygen permeability is preferably low even with high humidity, and a change in the oxygen permeability relative to a change in temperature is preferably small. From this viewpoint, an oxygen permeability measured under an environment at 23°C and 65%RH is preferably not more than 30 cc·3-μm/m$^2$·day·atm, and particularly preferably 5 cc·3-μm/m$^2$·day·atm.

EXAMPLES

Hereinafter, the present disclosure will be further specifically described with Examples, but the present disclosure is not limited to the following Examples without departing from the spirit thereof. In examples, "parts" and "%" mean those on a mass basis unless otherwise mentioned.

In Examples, methods for measuring a glass transition temperature, melting peaks and a melting enthalpy after stepwise cooling, a content of a conjugated polyene, a thermal stability test, and a biodegrading degree will be described below.

Melting Point

By using a differential scanning calorimeter (available from TA Instruments, "Q2000"), specified as a melting point was a melting peak temperature determined in accordance with a method for measuring a melting temperature after a certain thermal treatment in JIS K7121. Specifically, a resin composition is heated at a rate of 10°C/min from -50°C to 250°C to be melted, then cooled at a rate of 10°C/min to - 50°C, and heated again at a rate of 10°C/min from -50°C to 250°C. In this time, a temperature at a top of a melting peak in the second heating was determined as the melting point.

Glass Transition Temperature

In the differential scanning calorimetry for determining the melting point, a middle-point glass transition temperature determined from the curve (DSC curve) in the second heating in accordance with JIS K7121 was determined as a glass transition temperature.

Melting Peaks after Stepwise Cooling

By using a differential scanning calorimeter (available from TA Instruments, "Q2000"), the resin composition was melted, and cooled stepwise with keeping a constant temperature five times in the cooling, then heated, and melting peaks were detected to perform differential scanning calorimetry (DSC) under the following analysis conditions. In this procedure, a passage time from the measurement start, the temperature, and heat flow (an endothermic side was specified as the negative side) were recorded at each 0.5 seconds.

Analysis Conditions

(1) heating the resin composition at 10°C/min to a temperature being a melting point thereof +30°C, and then retaining a melted state at the temperature for 1 minute;
(2) cooling the resin composition at 10°C/min to a temperature being the melting point - 10°C, and then retaining this state at the temperature for 15 minutes;
(3) cooling the resin composition at 10°C/min to a temperature being the melting point - 20°C, and then retaining this state at the temperature for 15 minutes;
(4) cooling the resin composition at 10°C/min to a temperature being the melting point - 30°C, and then retaining this state at the temperature for 15 minutes;
(5) cooling the resin composition at 10°C/min to a temperature being the melting point - 40°C, and then retaining this state at the temperature for 15 minutes;
(6) cooling the resin composition at 10°C/min to a temperature being the melting point - 50°C, and then retaining this state at the temperature for 15 minutes;
(7) cooling the resin composition at 10°C/min to -50°C, and then retaining this state at the temperature for 15 minutes; and
(8) heating the resin composition again at 10°C/min to a temperature being the melting point +30°C.

Melting Enthalpy

From the melting peak in the DSC curve obtained by the differential scanning calorimetry, a melting enthalpy was determined as follows.

The term "entire melting peak" in the DSC curve has a meaning same as a peak used as the term in JIS K7121, and refers to a portion of the DSC curve between separating from a baseline and returning to the baseline again.

For example, as indicated in FIG. 1, a point on the lowest melting point side and at which the DSC curve was distanced from the baseline was specified as X, a point on the highest melting point side and at which the DSC curve was returned to the baseline was specified as Y, and a line XY was specified as the baseline in the following calculation of the melting enthalpy.

When a plurality of the melting peaks was observed on the DSC curve, these peaks were specified as a peak 1, a peak 2, ..., and a peak "n" from the higher temperature side in this order as indicated in FIG. 1.

Here, a melting peak temperature at the peak "n" was defined as a temperature at a top of the melting peak, similarly to the determination of the melting peak temperature in JIS K 7121. This melting peak temperature was also determined as a point at which a differential curve of the DSC curve changed from negative to positive together with rise in the measurement temperature to be zero as indicated in FIG. 2.

As a range of 156 to 166°C in FIG. 3, an interval in which the differential curve of the DSC curve was still negative and in which the portion with the differential curve of zero was absent was regarded as absence of the top of the melting peak, which was not treated as an independent melting peak but treated as a part of a peak on the higher temperature side (170°C) adjacent thereto. A "peak shoulder" was treated as not an independent melting peak but a part of an adjacent melting peak unless the differential curve of the DSC curve was zero.

Specified as a border temperature between the melting peak "n-1" and the melting peak "n" was a point at which the differential of the DSC curve changed from positive to negative between the melting peak "n-1" and the melting peak "n" with rise in the measurement temperature to be zero, as indicated in FIG. 2, for example.

A vertical line from the border temperature between the melting peaks determined by the above method to the baseline was drawn to set a border between adjacent melting peaks, and a melting enthalpy of each melting peak was determined from an area of a portion surrounded by the DSC curve and the baseline. Specified as a melting enthalpy of the entire melting peak was an area surrounded by the line XY and the DSC curve, as indicated in FIG. 1, for example.

How to Determine Differential Curve of DSC Curve

The differential curve of the DSC curve was determined as follows.

A temperature when "t" seconds was passed from the beginning of the differential scanning calorimetry was specified as "Temp (t)", a heat flow when the "t" seconds was passed was "Heat Flow (t)", and an instant changed(H) of the passed time "t" seconds relative to the heat flow temperature was determined from the following formula (5).

d(H)(t) = {Heat Flow (t + 0.5 seconds) - Heat flow (t seconds)}/{Temp (t + 0.5 seconds) - Temp (t seconds)} (5)

As a minute change relative to the heat flow temperature at "t" seconds, an average value of a values calculated by the formula (5) at 13 points in total of t and t±0.5 seconds to 3.0 seconds.

$$\text{Heat Flow Minute Change} = dHeatFlow/dTemp = [dH(t - 3.0\ \text{seconds}) + dH(t - 2.5\ \text{seconds}) + dH(t - 2.0\ \text{seconds}) + dH(t - 1.5\ \text{seconds}) + dH(t - 1.0\ \text{second}) + dH(t - 0.5\ \text{seconds}) + dH(t) + dH(t + 0.5\ \text{seconds}) + dH(t + 1.0\ \text{second}) + dH(t + 1.5\ \text{seconds}) + dH(t + 2.0\ \text{seconds}) + dH(t + 2.5\ \text{seconds}) + dH(t + 3.0\ \text{seconds})]/13 \quad (6)$$

A relationship between the minute change of the heat flow, dHeatFlow / dTemp, and the temperature measured in the same time, Temp, described as above was specified as the differential curve. FIGS. 2 and 3 indicates the examples.

Content of Conjugated Polyene

When the conjugated polyene was sorbic acid, a content thereof was determined as follows.

The resin composition was freeze-grinded and weighed at 200 mg, and dispersed by adding 3.5 mL of methanol thereinto and then 1.5 mL of water was added. Further, a mixed solvent of methanol/water = 7/3 (volume ratio) was added to be a total amount of 10 mL, and the solution was irradiated with ultrasonic wave for 60 minutes and dissolved to form a sample. A content of sorbic acid in this sample was quantified by liquid chromatography. A quantification lower limit by this method is 0.1 ppm, and a case of not more than the quantification lower limit is noted as "less than 0.1 ppm".

Thermal Stability Test

In a conical flask, 1 g of the resin composition was taken, and 100 mL of a test solvent shown in Table 3 was poured. The mixture was stirred at 95°C for 1 hour, and then cooled to room temperature (23°C). Thereafter, this solution was visually confirmed to be a uniform solution.

Then, 1 g of the resin composition was taken on an aluminum dish, and left to stand to be melted in an inert oven at 230°C filled with nitrogen. The melted resin composition was cooled to room temperature to be solidified and then grinded, and 100 mL of a test solvent shown in Table 3 was poured. The mixture was stirred at 95°C for 1 hour, and then cooled to room temperature (23°C). This product was visually observed to evaluate thermal stability on the following criteria.

(Evaluation Criteria)

Very Good: Undissolved component was absent, and the sample was a uniform solution.

Poor: Undissolved component was observed.

Biodegrading Degree

A biodegrading degree was evaluated under the following conditions with reference to a method described in JIS K6950.

- Apparatus; BOD TESTER 200F (available from TAITEC CORPORATION)
- Microbial source: Returned sludge of sewage treatment plant treating domestic sewage
- Culture solution for standard test: 100 mL
- Microbial source concentration: 90 mg/L
- Temperature: 25±1°C
- Term: 28 days

The biodegrading degree was determined from the biochemical oxygen demand and a theoretical oxygen demand.

<Example 1>

Into a temperature-controllable autoclave, 460 parts of vinyl acetate, 32 parts of 3,4-diacetoxy-1-butene, which was a monomer having an ester-protected side-chain primary hydroxy group, and 75 parts of methanol were fed, the system inside was once substituted with nitrogen gas, and then substituted with ethylene, and the temperature was raised to 67°C while stirring. After raising the temperature, ethylene was introduced with pressure so that the partial pressure was 1.0 MPa, a solution in which 0.082 parts of 2,2'-azobisisobutyronitrile was dissolved in 10 parts of methanol was added, and the internal temperature was kept at 67°C for 4 hours while stirring to perform a polymerization reaction.

Thereafter, a solution in which 0.096 parts of sorbic acid was dissolved in 100 parts of methanol was poured as a polymerization-reaction terminating step, and the mixture was cooled to room temperature (23°C). For a purpose of reducing an unreacted monomer, evaporating the volatile component by reducing a pressure and adding methanol were repeated.

Then, the above solution was diluted with methanol to regulate the concentration to be 10%, and a 3.5% sodium hydroxide solution in methanol was added at an amount such that an amount of sodium hydroxide was 10 mmol-eq. relative to the vinyl acetate unit in the copolymer while stirring the mixture in a flask equipped with a stirring apparatus and a cooling tube and while keeping the solution temperature at 45°C to perform primary saponification. A saponified product was precipitated approximately 30 minutes later, and the mixture finally became a slurry containing a particle product. To further proceed with saponification, as secondary saponification, the produced slurry was once filtered off, then dispersed again in methanol at a 20-time amount of the saponified product, and a 3.5% sodium hydroxide solution in methanol was added at an amount such that an amount of sodium hydroxide was 50 mmol-eq. relative to the initial vinyl acetate unit in the copolymer while stirring the mixture in a flask equipped with a stirring apparatus and a cooling tube to perform a reaction at 50°C for 3 hours. After the reaction, the mixture was neutralized with acetic acid, the slurry was filtered again to obtain a wet cake, this wet cake was washed three times with methanol at a five-time mass amount thereof and filtered, and then dried in a hot-blow dryer at 100°C for 8 hours to obtain a modified EVOH resin composition. The obtained copolymer had a 1,2-butanediol structure at a side chain as a primary hydroxy group structural unit.

The obtained modified EVOH resin had a saponification degree of 99.8 mol% analyzed from an alkali consumption amount on hydrolysis of the remained vinyl ester unit. A content of the ethylene structural unit was 7.5 mol% by NMR measurement, and a content (D) of the 1,2-butanediol structural unit was 3.3 mol%.

A content of sorbic acid being the conjugated polyene was 0.8 ppm, the melting point was 190°C, and the glass transition temperature (Tg) was 75°C.

Melting peaks and a melting enthalpy after stepwise cooling were measured according to the aforementioned method to found five melting peaks. A melting peak (peak 1) on the highest melting point side was observed at 182°C ($X_2$°C), a melting enthalpy thereof (A) was 28.8 J/g, a melting peak (peak 2) on the second highest melting point side was observed at 172°C ($Y_2$°C), and a melting enthalpy thereof (B) was 9.5 J/g. A melting enthalpy (C) of the entire melting peak was 48.2 J/g.

In the thermal stability test, water was used as the solvent to obtain a uniform solution in water. Also, a uniform solution of the once melted resin composition in water was obtained, which indicated good thermal stability.

The biodegrading degree was 72%.

The following Tables 1 and 2 show the copolymerization components etc. in Example 1, and the following Table 3 shows the physical properties etc. FIG. 4 indicates the DSC curve in Example 1.

<Examples 2 and 7 to 9, and Comparative Examples 1 to 3 and 6 to 8>

Polymerization was performed by changing the amount of the fed vinyl acetate, the type and amount of the monomer with the side-chain primary hydroxy group protected with ester, the amount of methanol, the partial pressure of ethylene, and the amount of 2,2'-azobisisobutyronitrile in Example 1 as in Table 1. Modified EVOH resin compositions or EVOH resin compositions were obtained in the same manners of the polymerization-terminating reaction step, the step of reducing the unreacted monomer, and the primary saponification as in Example 1 except that the presence or absence of the subsequent secondary saponification, the amount of alkali used in the secondary saponification, and the method of washing the wet cake after the saponification were changed as shown in Table 1.

<Examples 3 to 6, 10, and 11>

The amount of the fed vinyl acetate, the type and amount of the monomer with the side-chain primary hydroxy group protected with ester, and the amount of methanol in Example 1 were changed as in Table 1, and the procedure of raising the temperature to 67°C was performed in the same manner. Ethylene was introduced with pressure so that the ethylene partial pressure after raising the temperature was changed as in Table 1, and then a methanol solution (concentration of 2%) in which t-butyl peroxyneodecanoate was changed as in Table 1 was added over 4 hours while continuous stirring to perform the polymerization reaction. The mixture was continuously stirred at 67°C for additional 3 hours after the addition was finished to continue the polymerization reaction.

Thereafter, as the polymerization-reaction terminating step, a solution in which 0.096 parts of sorbic acid was dissolved in 100 parts of methanol was poured, and the mixture was cooled to room temperature (23°C). For a purpose of reducing an unreacted monomer, evaporating the volatile component by heating at 75°C and adding methanol were repeated.

Subsequently, the above solution was diluted with methanol to adjust the concentration to 30%, and a 8.7% sodium hydroxide solution in methanol was added at an amount such that an amount of sodium hydroxide was 9 mmol-eq. relative to the vinyl acetate unit while stirring the mixture with a kneader and keeping the solution temperature at 45°C to perform primary saponification. Approximately after 15 minutes, a saponified product was precipitated with increase in the viscosity, and the mixture finally formed a slurry containing a particle product. After 1 hour, a 8.7% sodium hydroxide solution in methanol was added at an amount such that an amount of sodium hydroxide was 11 mmol-eq. relative to the vinyl acetate unit in the copolymer to continue the primary saponification. To further proceed with the saponification, as secondary saponification, the produced slurry was once filtered off, then dispersed again in methanol at a five-time amount of the saponified product, and a 8.7% sodium hydroxide solution in methanol was added at an amount shown in Table 1 while stirring the mixture with kneader to perform a reaction at 50°C for 3 hours. In Example 10, the secondary saponification was not performed. Modified EVOH resin compositions were obtained by treatment in the same manner as in Example 1 except that the method for washing the wet cake was changed as in Table 1 after the neutralization with acetic acid after the saponification reaction.

<Example 12>

A modified EVOH resin composition of Example 12 was obtained by obtaining a modified EVOH resin composition in the same manner as in Example 3, then further adding sorbic acid such that the concentration was 370 ppm relative to the resin composition, and sufficiently mixing the mixture.

<Comparative Examples 4 and 5>

Polymerization was performed by changing the amount of the fed vinyl acetate, the type and amount of the monomer with the side-chain primary hydroxy group protected with ester, the amount of methanol, the partial pressure of ethylene, and the amount of 2,2'-azobisisobutyronitrile in Example 1 as in Table 1 . The polymerization-reaction terminating step and the procedure to reduce the unreacted monomer were also similarly performed, and then the saponification step was changed as follows.

The solution subjected to the procedure to reduce the unreacted monomer was diluted with methanol to adjust the concentration to 20%, and stirred. A 3.5% sodium hydroxide solution in methanol was added at an amount such that an amount of sodium hydroxide was 50 mmol-eq. relative to the vinyl acetate unit in the copolymer while keeping the solution temperature at 45°C for reflux for 30 minutes to perform primary saponification. In this time, the saponified product was not precipitated, and the solution state was retained. This solution was diluted with methanol to adjust the concentration to 10%, and then the volatile content was distilled off with an evaporator to adjust again the concentration to 20%. To further proceed with the saponification, as secondary saponification, a 3.5% sodium hydroxide solution in methanol was further added at an amount such that an amount of sodium hydroxide was 50 mmol-eq. relative to the initial vinyl acetate unit in the copolymer for reflux for 30 minutes. The saponified product was not precipitated also in this time, and the state was the solution state. This solution was cooled with an ice bath to allow the product to form a white gel solid. The gel solid was crushed and poured into a 2.5% acetic acid aqueous solution at a three-time mass of the gel solid to obtain a wet cake. Thereafter, this wet cake was washed three times with water at a five-time mass thereof, filtered, and then dried in a hot-blow dryer at 100°C for 8 hours to obtain a modified EVOH resin composition.

Of the obtained modified EVOH resin compositions or EVOH resin compositions of Examples 2 to 12 and Comparative Examples 1 to 8, the content of the ethylene structural unit, the content of the structural unit having the primary hydroxy group at the side chain, the saponification degree, the conjugated polyene compound and the content thereof, Tg, the melting point, the melting peaks, the melting enthalpy, the solvent used in the thermal stability test and its solubility were determined in the same manner as in Example 1. The following Tables 2 and 3 show the results. FIGS. 5 to 8 respectively indicate the DSC curves in Example 2 and Comparative Examples 1, 2, and 7.

[Table 1]

| | Polymerization conditions | | | | | | | Saponification | | | Post-treatment of drvina |
|---|---|---|---|---|---|---|---|---|---|---|---|
| | Vinyl acetate (parts) | Monomer with a protected side-chain hydroxy group with ester | | Methanol (parts) | Ethylene partial pressure (MPa) | Initiator | | Secondary Saponification | Alkali amount used in secondary saponification (eq.) *3 | Method for washing wet cake *4 | Post-addition of conjugate polyene |
| | | 3,4-Diacetoxy-1-butene (parts) | 2-Methylene-1,3-propanediol diacetate (parts) | | | 2,2'-Azobisisobutyronitrile (parts) *1 | t-Butyl peroxyneodecanoate (parts) *2 | | | | |
| Example 1 | 460 | 32 | - | 75 | 1 | 0.082 | - | present | 50 mmol | A | absent |
| Example 2 | 460 | - | 18 | 75 | 1 | 0.082 | - | present | 50 mmol | A | absent |
| Example 3 | 460 | 42 | - | 195 | 1.01 | - | 0.102 | present | 50 mmol | A | absent |
| Example 4 | 460 | 44 | - | 179 | 125 | - | 0.103 | present | 50 mmol | A | absent |
| Example 5 | 460 | 31 | - | 196 | 0.85 | - | 0.064 | present | 50 mmol | A | absent |
| Example 6 | 460 | 36 | - | 132 | 1.35 | - | 0.129 | present | 50 mmol | A | absent |
| Example 7 | 460 | 48 | - | 75 | 0.3 | 0.082 | - | present | 50 mmol | A | absent |
| Example 8 | 460 | 32 | - | 75 | 0.7 | 0.082 | - | present | 50 mmol | A | absent |
| Example 9 | 460 | 48 | - | 75 | 2 | 0.082 | - | present | 50 mmol | A | absent |
| Example 10 | 460 | 42 | - | 195 | 1.01 | - | 0.102 | absent | - | A | absent |
| Example 11 | 460 | 42 | - | 195 | 1.01 | - | 0.102 | present | 10 mmol | A | absent |
| Example 12 | 460 | 42 | - | 195 | 1.01 | - | 0.102 | present | 50 mmol | A | present |
| Comparative Example 1 | 460 | - | - | 75 | 1 | 0.082 | - | present | 50 mmol | A | absent |
| Comparative Example 2 | 460 | 16 | - | 75 | 1 | 0.082 | - | present | 50 mmol | A | absent |
| Comparative Example 3 | 460 | - | 9 | 75 | 1 | 0.082 | - | absent | - | A | absent |

(continued)

| | Polymerization conditions | | | | | | | Saponification | | | Post-treatment of drvina |
|---|---|---|---|---|---|---|---|---|---|---|---|
| | Vinyl acetate (parts) | Monomer with a protected side-chain hydroxy group with ester | | Methanol (parts) | Ethylene partial pressure (MPa) | Initiator | | Secondary Saponification | Alkali amount used in secondary saponification (eq.) *3 | Method for washing wet cake *4 | Post-addition of conjugate polyene |
| | | 3,4-Diacetoxy-1-butene (parts) | 2-Methylene-1,3-propanediol diacetate (parts) | | | 2,2'-Azobisisobutyronitrile (parts) *1 | t-Butyl peroxyneodecanoate (parts) *2 | | | | |
| Comparative Example 4 | 460 | - | - | 75 | 4 | 0.082 | - | present | 50 mmol | B | absent |
| Comparative Example 5 | 460 | - | 1.4 | 75 | 4 | 0.082 | - | present | 50 mmol | B | absent |
| Comparative Example 6 | 460 | 16 | - | 75 | 1.5 | 0.082 | - | present | 50 mmol | A | absent |
| Comparative Example 7 | 460 | - | 25 | 75 | 1.5 | 0.082 | - | present | 50 mmol | A | absent |
| Comparative Example 8 | 460 | - | 18 | 75 | 1 | 0.082 | - | present | 50 mmol | C | absent |

*1: The 0.82-mass% methanol solution was entirely added at the beginning of the polymerization.
*2: The 0.2-mass% methanol solution was continuously added over 4 hours from the beginning of the polymerization.
*3: An equivalent amount relative to the vinyl acetate unit in the copolymer before the primary saponification
*4: A: washed three times with methanol at five-time mass of the wet cake,
B: washed three times with water at five-time mass of the wet cake,
C: washed three times with methanol at five-time mass of the wet cake, and then Soxhlet-extracted with methanol for one day

[Table 2]

| | Content of ethylene structural unit (mol%) | Content of primary hydroxy group structural unit (mol%) | | Saponification degree (mol%) | Conjugated polyene | | Number of melting peaks |
|---|---|---|---|---|---|---|---|
| | | 1,2-Butanediol structural unit | 1,3-Propanediol structural unit | | Compound | Content (ppm) | |
| Example 1 | 7.5 | 3.3 | 0 | 99.8 | Sorbic acid | 0.8 | 5 |
| Example 2 | 7.6 | 0 | 3.9 | 99.7 | Sorbic acid | 0.5 | 5 |
| Example 3 | 9 | 4 | 0 | 99.7 | Sorbic acid | 0.9 | 5 |
| Example 4 | 10.6 | 4 | 0 | 99.9 | Sorbic acid | 0.4 | 6 |
| Example 5 | 7.7 | 3.1 | 0 | 99.9 | Sorbic acid | 0.7 | 6 |
| Example 6 | 11.4 | 3.2 | 0 | 99.9 | Sorbic acid | 0.8 | 5 |
| Example 7 | 2 | 5.3 | 0 | 99.7 | Sorbic acid | 0.6 | 5 |
| Example 8 | 4 | 3.6 | 0 | 99.7 | Sorbic acid | 1.2 | 5 |
| Example 9 | 15.5 | 3.9 | 0 | 99.7 | Sorbic acid | 0.9 | 5 |
| Example 10 | 9 | 4.1 | 0 | 98.6 | Sorbic acid | 0.9 | 5 |
| Example 11 | 8.7 | 4 | 0 | 99.2 | Sorbic acid | 0.9 | 5 |
| Example 12 | 9 | 4 | 0 | 99.7 | Sorbic acid | 370 | 5 |
| Comparative Example 1 | 6.6 | 0 | 0 | 99.9 | Sorbic acid | 0.15 | 3 |
| Comparative Example 2 | 7 | 1.9 | 0 | 99.9 | Sorbic acid | 0.5 | 4 |
| Comparative Example 3 | 7 | 0 | 2 | 98.6 | Sorbic acid | 0.5 | 4 |
| Comparative Example 4 | 31.5 | 0 | 0 | 99.7 | Sorbic acid | 120 | 3 |
| Comparative Example 5 | 32.6 | 0 | 0.3 | 99.7 | Sorbic acid | 120 | 4 |
| Comparative Example 6 | 11.5 | 1.7 | 0 | 99.8 | Sorbic acid | 0.6 | 4 |
| Comparative Example 7 | 11.8 | 0 | 5 | 99.7 | Sorbic acid | 0.7 | 3 |
| Comparative Example 8 | 7.6 | 0 | 3.9 | 99.7 | Sorbic acid | less than 0.1 | 5 |

[Table 3]

| | Content of primary hydroxy group structural unit (D) [mol%] | Grass transition temperature (°C) | Melting point (°C) | Melting enthalpy (J/g) | | | (A)/(C) ×100 | -13.5×(D)-95 | (A)/(B) | -2.3×(D)+9.2 | Thermal stability | | Biodegrading degree (%) |
|---|---|---|---|---|---|---|---|---|---|---|---|---|---|
| | | | | (A)*1 | (B)*2 | (C)*2 | | | | | Test solvent [volume ratio] | Solubility*4 | |
| Example 1 | 3.3 | 75 | 190 | 28.8 | 9.5 | 48.2 | 59.8 | 50.5 | 3 | 1.6 | water | Good | 72 |
| Example 2 | 3.9 | 76 | 186 | 23.7 | 9.2 | 43.3 | 54.7 | 42.4 | 2.6 | 0.2 | water | Good | 64 |
| Example 3 | 4 | 74 | 183 | 26.4 | 10 | 47.2 | 55.9 | 41 | 2.6 | 0 | water | Good | 77 |
| Example 4 | 4 | 72 | 182 | 21.9 | 10.9 | 44.8 | 48.9 | 41 | 2 | 0 | water | Good | 46 |
| Example 5 | 3.1 | 74 | 194 | 29.5 | 11.3 | 53.2 | 55.5 | 532 | 2.6 | 2.1 | water | Good | 59 |
| Example 6 | 3.2 | 71 | 185 | 32.8 | 8.5 | 50.6 | 64.8 | 51.8 | 3.9 | 18 | water:IPA=8:2 | Good | 53 |
| Example 7 | 5.3 | 78 | 187 | 196 | 9.7 | 39.4 | 49.7 | 23.5 | 2 | -3 | water | Good | 58 |
| Example 8 | 3.6 | 78 | 196 | 27.3 | 9.8 | 47.6 | 57.4 | 46.4 | 2.8 | 0.9 | water | Good | 62 |
| Example 9 | 3.9 | 69 | 167 | 17.1 | 11.5 | 38.9 | 44 | 42.4 | 1.5 | 0.2 | water:IPA=8:2 | Good | 36 |
| Example 10 | 41 | 73 | 180 | 21.4 | 9.3 | 40.1 | 53.4 | 39.7 | 2.3 | -0.2 | water | Good | 64 |
| Example 11 | 4 | 74 | 183 | 22.3 | 10 | 43.2 | 51.6 | 41 | 2.2 | 0 | water | Good | 59 |
| Example 12 | 4 | 74 | 183 | 26.5 | 10 | 47.3 | 56 | 41 | 2.7 | 0 | water | Good | 71 |
| Comparative Example 1 | 0 | 76 | 219 | 60 | 8.4 | 72.4 | 82.9 | 95 | 7.1 | 92 | water:IPA=8:2 | Good | 11 |
| Comparative Example 2 | 1.9 | 77 | 203 | 40.2 | 9.7 | 62.7 | 64.1 | 69.4 | 4.1 | 48 | water | Good | 71 |
| Comparative Example 3 | 2 | 75 | 191 | 39.8 | 9.2 | 61.2 | 65 | 68 | 4.3 | 46 | water | Good | 61 |
| Comparative Example 4 | 0 | 62 | 183 | 59 | 8.7 | 72.5 | 81.4 | 95 | 6.8 | 9.2 | water:IPA=5:5 | Good | 6 |

(continued)

| | Content of primary hydroxy group structural unit (D) [mol%] | Grass transition temperature (°C) | Melting point (°C) | Melting enthalpy (J/g) | | | (A)/(C) ×100 | -13.5×(D)-95 | (A)/(B) | -2.3×(D)+9.2 | Thermal stability | | Biodegrading degree (%) |
|---|---|---|---|---|---|---|---|---|---|---|---|---|---|
| | | | | (A)*1 | (B)*2 | (C)*2 | | | | | Test solvent [volume ratio] | Solubility*4 | |
| Comparative Example 5 | 0.3 | 59 | 173 | 40.6 | 9.7 | 64.2 | 63.2 | 91.2 | 4.2 | 8.6 | water:IPA=5:5 | Good | 6 |
| Comparative Example 6 | 1.7 | 72 | 195 | 38.5 | 10 | 60.5 | 63.6 | 72.1 | 3.9 | 5.3 | water:IPA=8:2 | Good | 19 |
| Comparative Example 7 | 5 | 72 | 172 | 251 | 8.3 | 37.3 | 67.3 | 27.5 | 3 | -2.3 | water:IPA=8:2 | Good | 26 |
| Comparative Example 8 | 3.9 | 75 | 186 | 23.5 | 9.3 | 43.2 | 54.4 | 42.4 | 2.5 | 0.2 | water | Poor | 65 |

*1: Total of melting enthalpies observed at higher temperatures being equal to or higher than the melting point -10°C
*2: The melting enthalpy of the peak observed at the highest temperature lower than the melting point -10°C
*3: Melting enthalpy of the entire peak
*4: Solubility of the sample in a solvent with dissolution at 230°C under nitrogen for 30 minutes

From the results in Table 3, the uniform solution was obtained in all Examples and Comparative Examples in the case where the resin composition was not melted in the thermal stability test. When the resin composition was melted once, the uniform solution was obtained and good thermal stability was exhibited in all Examples 1 to 12 and Comparative Examples 1 to 7, but in Comparative Example 8, a uniform solution was failed to be obtained, and the thermal stability was poor.

By using each of the obtained resin compositions in Examples 1 to 12 and Comparative Examples 1 to 8, the following evaluation was performed.

Film Formation with Solution Casting

Each of the resin compositions of Examples 1, 2, 7 to 9, and 12, and Comparative Examples 1 to 3 and 6 to 8 was dissolved in a film-producing solvent shown in Table 4 so that the concentration was 10 mass% to prepare a solution. This solution was casted on a PET film substrate (100 μm in thickness), and then the solvent was evaporated at room temperature to obtain a roughly dried film. This roughly dried film was dried in the presence of phosphorus pentoxide at 105°C under a reduced pressure until the amount became constant, and then the PET film substrate was peeled to obtain a film with solution casting. A thickness of the film was approximately 20 to 30 μm.

Production of Pellets

Each of the modified EVOH resin compositions of Examples 3 to 6, 10, and 11 was extruded under the following conditions to produce pellets.

• Pellet Forming Conditions

Extruder: Biaxial kneading extruder, TEM-18DS, available from SHIBAURA MACHINE CO., LTD.
Screw: Biaxial, 20 mmΦ, L/D=48
Set temperature at cylinder part: 170 to 220°C
Set temperature at header part: 210°C
Cooling method for extruded resin: Air-cooling belt
Discharging amount: 4 kg/hr

Production of Melting-Extruded Single-Layer Film

The obtained pellets in Examples 4 to 6 were extruded under the following conditions to obtain a melting-extruded single-layer film.

• Film Producing Conditions

Extruder: Plastogrpah EC-plus, available from Brabender GmbH
Screw: monoaxial, 20 mmΦ, full flight
Set temperature at cylinder part: 170 to 220°C
Set temperature at cooling roller: 80°C
Film thickness: 20 μm

Production of Melting-Extruded Multilayer Film

The obtained pellets in Examples 3, 10, and 11 were extruded under the following conditions to obtain a melting-extruded multilayer film having a multilayer structure of LLDPE / LLDPE / gas-barrier layer (layer composed of the modified EVOH resin composition) / LLDPE / LLDPE.

• Film Producing Conditions

Extruder: Three-type five-layer inflation film-forming apparatus, Research Laboratory of Plastics Technology Co., Ltd.
Screw: Monoaxial, 20 mmΦ, full flight
Set temperature at cylinder part: 180 to 210°C
Film thickness: 90 μm (LLDPE 40 μm / gas-barrier layer 10 μm / LLDPE 40 μm)
LLDPE: NOVATEC LL UF240, available from Mitsubishi Chemical Corporation

Production of Press-Formed Film

With the resin compositions of Comparative Examples 4 and 5, the measurement sample was press-formed by using a small-sized thermal pressing machine AH-10TD, available from AS ONE CORPORATION, to obtain a press-formed film with 0.1 mm in thickness under conditions of a preheating temperature of 210°C, a preheating time of 30 seconds, a heating temperature of 210°C, a heating time of 1 minute, a weight with heating of 1 t, a cooling temperature of 20°C, and a cooling time of 30 seconds.

<Tensile Test Conditions>

The obtained films with solution casting, melting-extruded single-layer film, melting-extruded multilayer film, and press-formed film were subjected to a tensile test by using Rheogel-E4000, available from UBM Corporation, with a distance between grippers of 10 mm, a tensile speed of 1.1 mm/sec, and a measurement mode of S-S measurement at temperatures being the glass transition temperature -10°C, ±0°C, +10°C, +20°C, and +30°C to obtain a stress/strain curve. The melting-extruded multilayer film was subjected to the tensile test by peeling the LLDPE layers to prepare only the gas-barrier layer (layer composed of the modified EVOH resin composition).

FIGS. 9 to 13 respectively indicate the stress/strain curves of Examples 1, 2, and 6 and Comparative Examples 1 and 2.

Tables 4 to 7, described later, show the tensile test results and the stretching processability evaluation in Examples and Comparative Examples.

In the tensile test, evaluation was performed by presence or absence of the yield point in the tensile test at the temperatures being Tg +10 to 30°C. As for the stretching processability, a case where there was no yield point in the tensile test at the temperatures being Tg +10 to 30°C was evaluated as "Very Good" stretching processability, and a case where there was an yield point was "Poor" stretching processability. Tables 4 to 7, described later, show the results.

Production of Gas-Barrier Material

Each of the resin compositions of Examples 1, 2, 7 to 9, and 12 and Comparative Examples 1 to 3 and 6 to 8 was dissolved in a film-producing solvent shown in Table 4 so that the concentration was 10 mass% to prepare a solution. This solution was applied on a corona-treated PET film (38 μm in thickness) with a bar coater, and dried at 80°C for 5 minutes to obtain a gas-barrier material having a layer composed of the resin composition with 3 μm in thickness.

<Oxygen Permeability>

An oxygen permeability of this obtained gas-barrier material, the melting-extruded single-layer film, the melting-extruded multilayer film, and the press-formed film was measured at a temperature of 23°C and a humidity of 65%RH by using an oxygen permeability measurement apparatus ("OXTRAN 2/20", available from MOCON Inc.), and this measured value was converted into a value on the resin composition with 3 μm in thickness to be specified as a value exhibiting the gas-barrier property.

On the gas-barrier material, the melting-extruded single-layer film, and the press-formed film, oxygen permeability at a humidity of 0%RH was also similarly measured. The following Tables 4 to 7 show the results.

[Table 4]

| Film/gas-barrier material by solution casting | Film-producing solvent | Tensile test* | Stretching processability | Oxygen permeability (cc·3-μm/$m^2$·day·atm) | |
|---|---|---|---|---|---|
| | | | | 0%RH | 65%RH |
| Example 1 | water | yield point absent | Good | 0.02 | 1.5 |
| Example 2 | water | yield point absent | Good | 0.03 | 1.9 |
| Example 7 | water | yield point absent | Good | 0.02 | 3.2 |

(continued)

| Film/gas-barrier material by solution casting | Film-producing solvent | Tensile test* | Stretching processability | Oxygen permeability (cc·3-μm/m²·day·atm) | |
|---|---|---|---|---|---|
| | | | | 0%RH | 65%RH |
| Example 8 | water | yield point absent | Good | 0.02 | 2.7 |
| Example 9 | water:IPA=8:2 | yield point absent | Good | 0.09 | 3 |
| Example 12 | water | yield point absent | Good | 0.02 | 1.1 |
| Comparative Example 1 | water:IPA=8:2 | yield point present | Poor | 0.03 | 1.5 |
| Comparative Example 2 | water | yield point present | Poor | 0.07 | 1.6 |
| Comparative Example 3 | water | yield point present | Poor | 0.02 | 0.61 |
| Comparative Example 6 | water:IPA=8:2 | yield point present | Poor | 0.07 | 1.6 |
| Comparative Example 7 | water:IPA=8:2 | yield point absent | Good | 0.04 | 1.07 |
| Comparative Example 8 | water | yield point absent | Good | 0.03 | 1.9 |
| *: Presence or absence of the yield point at Tg +10 to 30°C | | | | | |

[Table 5]

| Melting-extruded single-layer film | Tensile test* | Stretching processability | Oxygen permeability (cc·3-μm/m²·day·atm) | |
|---|---|---|---|---|
| | | | 0%RH | 65%RH |
| Example 4 | yield point absent | Good | 0.02 | 2 |
| Example 5 | yield point absent | Good | 0.02 | 1.5 |
| Example 6 | yield point absent | Good | 0.03 | 1.7 |
| *: Presence or absence of the yield point at Tg +10 to 30°C | | | | |

[Table 6]

| Melting-extruded multilayer film | Tensile test* | Stretching processability | Oxygen permeability (cc·3-μm/m²·day·atm) |
|---|---|---|---|
| | | | 65%RH |
| Example 3 | yield point absent | Good | 1.2 |
| Example 10 | yield point absent | Good | 2.8 |
| Example 11 | yield point absent | Good | 2.5 |
| *: Presence or absence of the yield point at Tg +10 to 30°C | | | |

[Table 7]

| Press-forming film | Tensile test* | Stretching processability | Oxygen permeability (cc·3-μm/m²·day·atm) | |
|---|---|---|---|---|
| | | | 0%RH | 65%RH |
| Comparative Example 4 | yield point present | Poor | 0.83 | 2.6 |
| Comparative Example 5 | yield point present | Poor | 0.98 | 2.7 |
| *: Presence or absence of the yield point at Tg +10 to 30°C | | | | |

From the results in Tables 4 to 6 and FIGS. 9, 10, and 11, the films of Examples 1, 2, and 6, which satisfied all the requirements prescribed in the present disclosure, exhibited no yield point at the temperature higher than the glass transition temperature by 10°C, 20°C, or 30°C, and behavior of increase in the stress together with the strain was observed. From these results, the films of Examples 1, 2, and 6 were subjected to an appropriate tensile force when the film was tensed at a processing temperature of Tg +10 to 30°C, and suitable for stretching process.

The film of Example 6 was cut to a size of 100 mm × 100 mm and tried to be subjected to simultaneous biaxial stretching with a stretching apparatus Karo IV, which was for R&D and available from Bruckner Maschinenbau GmbH, at 101°C, which was Tg +30°C, and was able to be stretch-processed with 2.0×2.0 times without breakage or defects. Further, a specimen with 85 mm × 85 mm was cut from this stretched film and immersed in olive oil at 111°C. The immersed film was shrunk within 10 seconds, and the shrunk film had a size of 49×48 mm. From this result, it was found that the film of Example 6 also had a shrinking property after stretching process.

From the results in Tables 4 and 7 and FIGS. 12 and 13, the films of Comparative Examples 1 and 2, which did not satisfy the requirements prescribed in the present disclosure, had the yield point at all the temperatures being the glass transition temperature -10°C, ±0°C, +10°C, +20°C, and +30°C, and unsuitable for the stretching process.

From the above results, the modified EVOH resin compositions of Examples 1 to 12 exhibited excellent stretching processability, a low oxygen permeability, and high biodegradability.

Meanwhile, the EVOH resin compositions of Comparative Examples 1 and 4 and the modified EVOH resin compositions of Comparative Examples 2, 3, 5, and 6, which did not find not less than five melting peaks when analyzed in accordance with the specific analysis conditions, exhibited poor stretching processability.

The EVOH resin composition of Comparative Example 4 and the modified EVOH resin compositions of Comparative Examples 5 and 6 exhibited poor biodegradability.

The modified EVOH resin composition of Comparative Example 7 did not find an yield point in the tensile test at the temperature higher than the glass transition temperature by 30°C, but found only four peaks in the DSC analysis under the analysis conditions. This resin exhibited excessively slow crystallization, and poor biodegradability.

The modified EVOH resin composition of Comparative Example 8 did not find an yield point in the tensile test at the temperature higher than the glass transition temperature by 30°C, found five peaks in the DSC analysis under the analysis conditions, which indicated the appropriate crystallization rate and preferable biodegradability. However, the amount of the conjugated polyene was as low as an undetectable amount, and the thermal stability was poor.

While specific forms of the present disclosure have been shown in the aforementioned Examples, Examples are merely examples and should not be limitedly interpreted. Various modifications obvious to a person skilled in the art are all intended to be included in the scope of the present disclosure.

## INDUSTRIAL APPLICABILITY

The present EVOH resin composition has excellent stretching processability, low oxygen permeability, excellent biodegradability, and excellent thermal stability. Therefore, the present EVOH resin composition is useful as packaging materials, and can be particularly preferably used as the packaging material for foods, medicines, etc.

## Claims

**1.** A modified ethylene-vinyl alcohol resin composition, comprising:

a modified ethylene-vinyl alcohol resin having a primary hydroxy group structural unit at a side chain; and
a conjugated polyene, wherein
the modified ethylene-vinyl alcohol resin has an ethylene structural unit at 1 to 16.5 mol%, and
the resin composition exhibits not less than five melting peaks when subjected to differential scanning calorimetry (DSC) according to the following analysis conditions:

(1) heating the modified ethylene-vinyl alcohol resin composition at 10°C/min to a temperature being a melting point thereof +30°C, and then retaining a melted state at the temperature for 1 minute;
(2) cooling the modified ethylene-vinyl alcohol resin composition at 10°C/min to a temperature being the melting point -10°C, and then retaining this state at the temperature for 15 minutes;
(3) cooling the modified ethylene-vinyl alcohol resin composition at 10°C/min to a temperature being the melting point -20°C, and then retaining this state at the temperature for 15 minutes;
(4) cooling the modified ethylene-vinyl alcohol resin composition at 10°C/min to a temperature being the melting point -30°C, and then retaining this state at the temperature for 15 minutes;
(5) cooling the modified ethylene-vinyl alcohol resin composition at 10°C/min to a temperature being the

melting point -40°C, and then retaining this state at the temperature for 15 minutes;
(6) cooling the modified ethylene-vinyl alcohol resin composition at 10°C/min to a temperature being the melting point -50°C, and then retaining this state at the temperature for 15 minutes;
(7) cooling the modified ethylene-vinyl alcohol resin composition at 10°C/min to -50°C, and then retaining this state at the temperature for 15 minutes; and
(8) heating the modified ethylene-vinyl alcohol resin composition again at 10°C/min to the temperature being the melting point +30°C,

where the melting point of the modified ethylene-vinyl alcohol resin composition refers to a melting peak temperature determined in accordance with a method of performing a predetermined thermal treatment and then measuring a melting point in JIS K7121.

2. The modified ethylene-vinyl alcohol resin composition according to claim 1, wherein the resin composition satisfies the following formulae (1) and (2),

$$65 \geq (A)/(C)\times 100 \geq 30 \ldots (1)$$

$$(A)/(C)\times 100 \geq -13.5\times(D) + 95 \ldots (2)$$

wherein (D) represents a content (mol%) of the primary hydroxy group structural unit at the side chain contained in the modified ethylene-vinyl alcohol resin; (A) represents a melting enthalpy of a melting peak observed at high temperature not lower than the melting point of the modified ethylene-vinyl alcohol resin composition -10°C when the resin composition is analyzed in accordance with the differential scanning calorimetry conditions; and (C) represents a melting enthalpy of an entirety of the melting peaks of the modified ethylene-vinyl alcohol resin composition.

3. The modified ethylene-vinyl alcohol resin composition according to claim 1 or 2, wherein the resin composition satisfies the following formulae (3) and (4),

$$65 \geq (A)/(B) \ldots (3)$$

$$(A)/(B) \geq -2.3\times(D) + 9.2 \ldots (4)$$

wherein (D) represents a content (mol%) of the primary hydroxy group structural unit at the side chain contained in the modified ethylene-vinyl alcohol resin; (A) represents a melting enthalpy of a melting peak observed at high temperature lower than the melting point of the modified ethylene-vinyl alcohol resin composition by not less than -10°C when the resin composition is analyzed In accordance with the differential scanning calorimetry conditions; and (B) represents a melting enthalpy of a melting peak observed at a highest temperature within temperatures lower than the melting point of the modified ethylene-vinyl alcohol resin composition -10°C.

4. The modified ethylene-vinyl alcohol resin composition according to any one of claims 1 to 3, wherein the conjugated polyene is contained by 0.1 to 500 ppm relative to the modified ethylene-vinyl alcohol resin composition.

5. A gas-barrier material, comprising a layer composed of the modified ethylene-vinyl alcohol resin composition according to any one of claims 1 to 4.

6. A stretched film, comprising a layer composed of the modified ethylene-vinyl alcohol resin composition according to any one of claims 1 to 4.

FIG.1

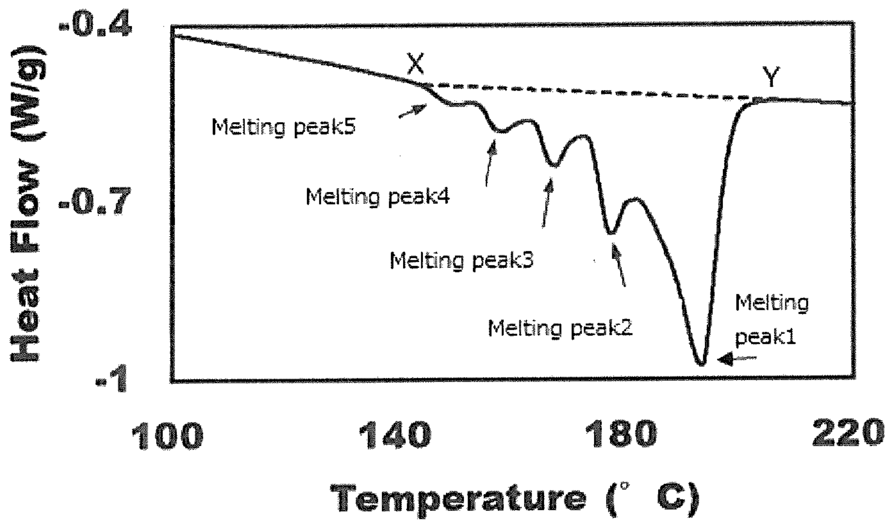
-0.4
-0.7
-1
Heat Flow (W/g)
X
Y
Melting peak5
Melting peak4
Melting peak3
Melting peak2
Melting peak1
100
140
180
220
Temperature (° C)

FIG.2

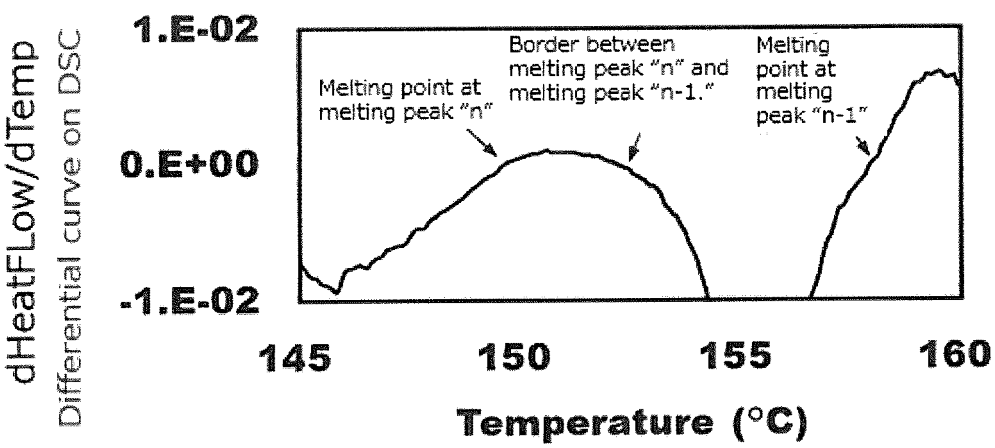
1.E-02
0.E+00
-1.E-02
dHeatFLow/dTemp
Differential curve on DSC
Melting point at melting peak "n"
Border between melting peak "n" and melting peak "n-1."
Melting point at melting peak "n-1"
145
150
155
160
Temperature (°C)

FIG.3

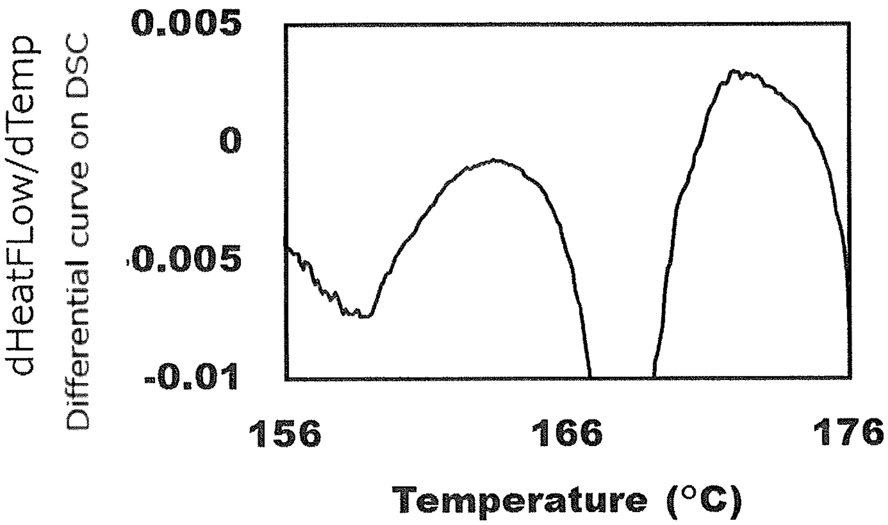
0.005
0
-0.005
-0.01
dHeatFLow/dTemp
Differential curve on DSC
156
166
176
Temperature (°C)

FIG.4

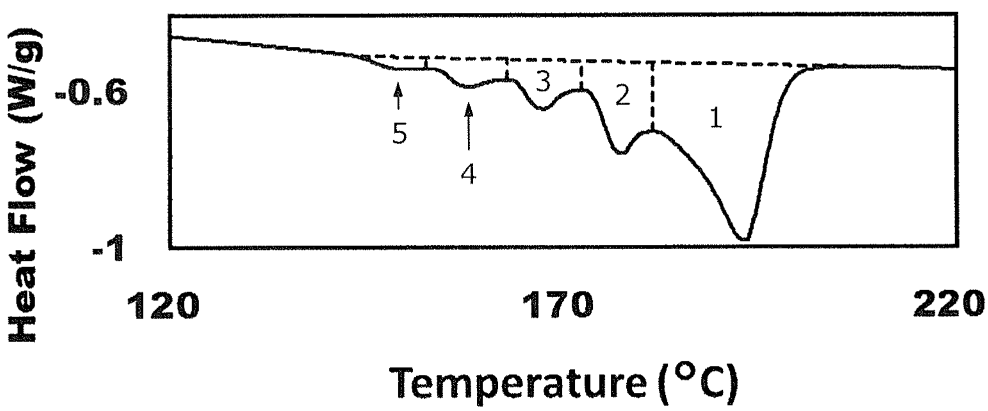
Heat Flow (W/g)
-0.6
-1
120
170
220
Temperature (°C)
1
2
3
4
5

FIG.5

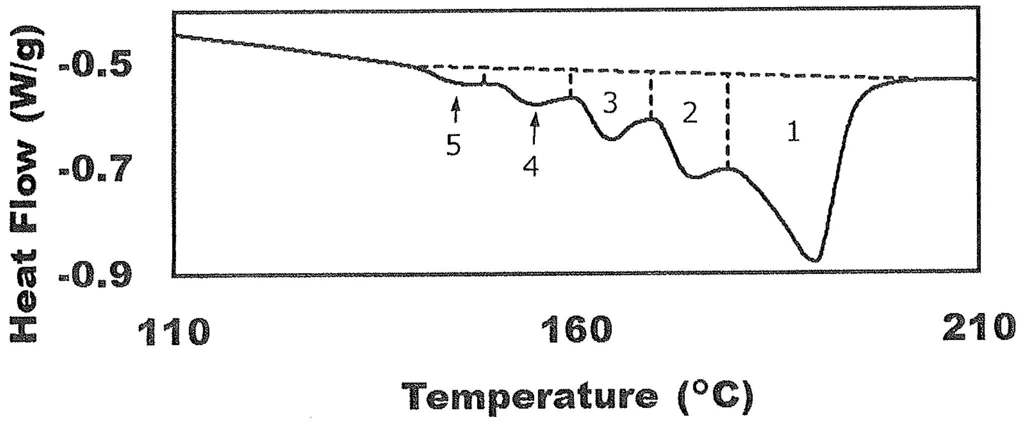
Heat Flow (W/g)
-0.5
-0.7
-0.9
110
160
210
Temperature (°C)
1
2
3
4
5

FIG.6

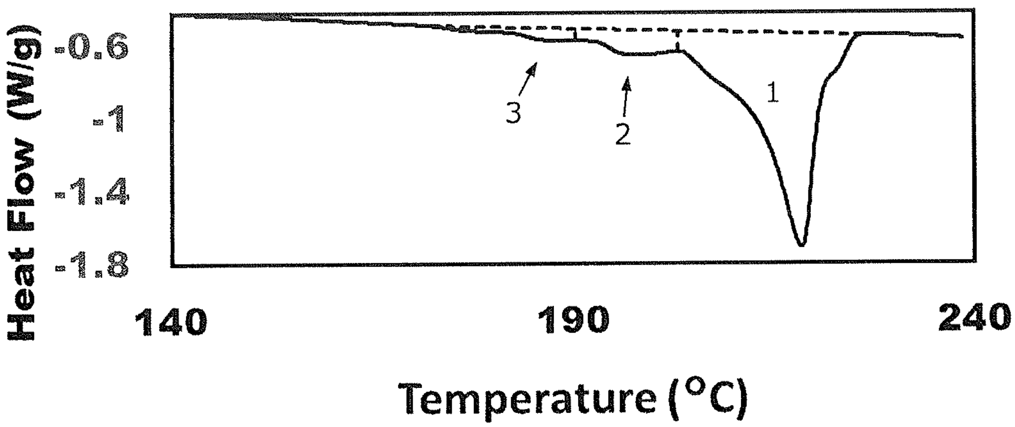
Heat Flow (W/g)
-0.6
-1
-1.4
-1.8
140
190
240
Temperature (°C)
1
2
3

FIG.7

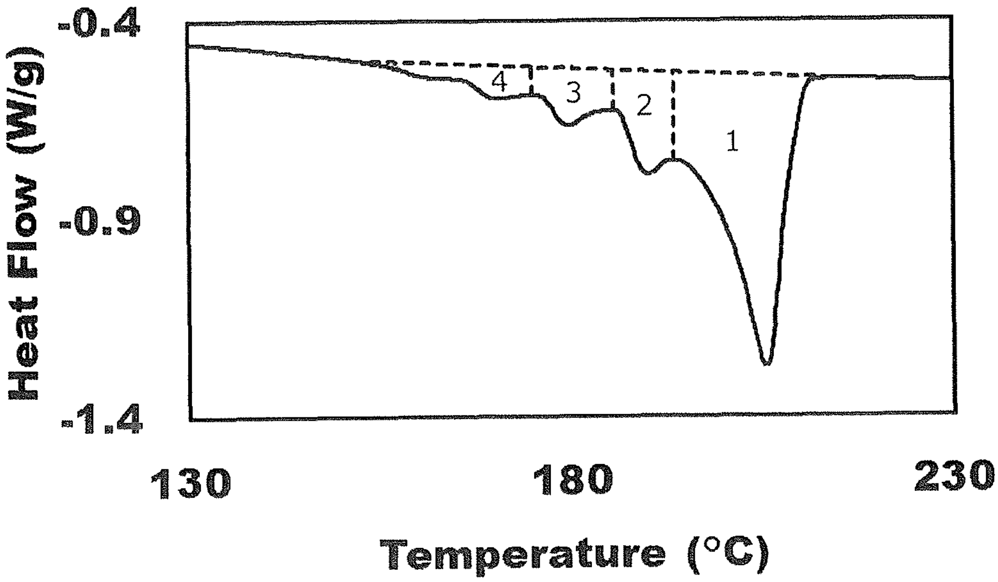
-0.4
-0.9
-1.4
Heat Flow (W/g)
130
180
230
Temperature (°C)
4
3
2
1

FIG.8

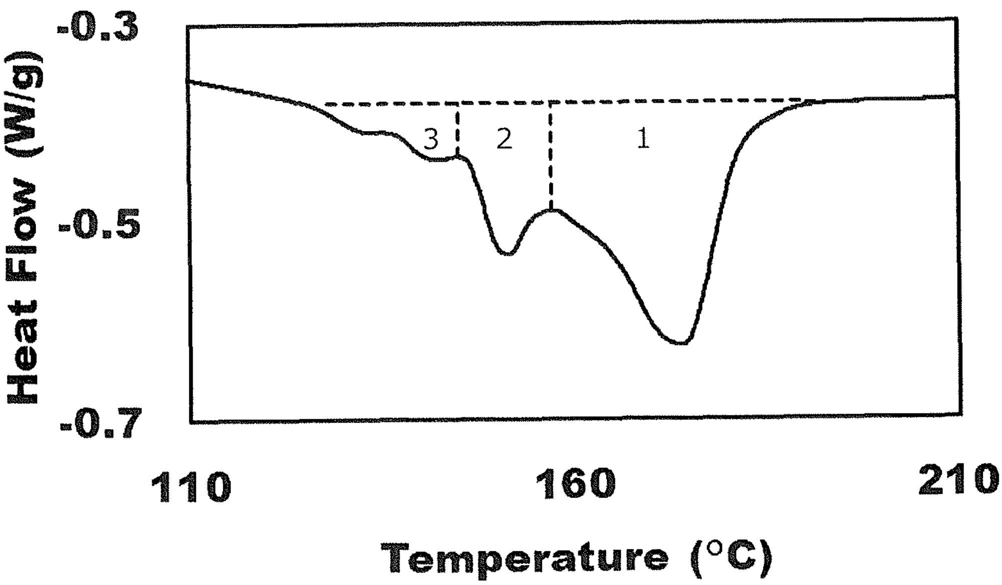
-0.3
-0.5
-0.7
Heat Flow (W/g)
110
160
210
Temperature (°C)
3
2
1

FIG.9

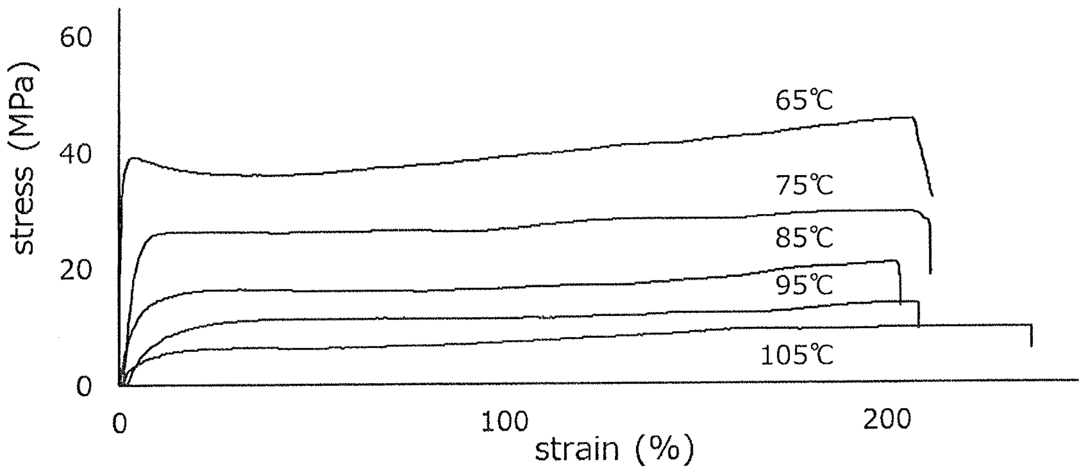
60
40
20
0
stress (MPa)
65℃
75℃
85℃
95℃
105℃
0
100
200
strain (%)

FIG.10

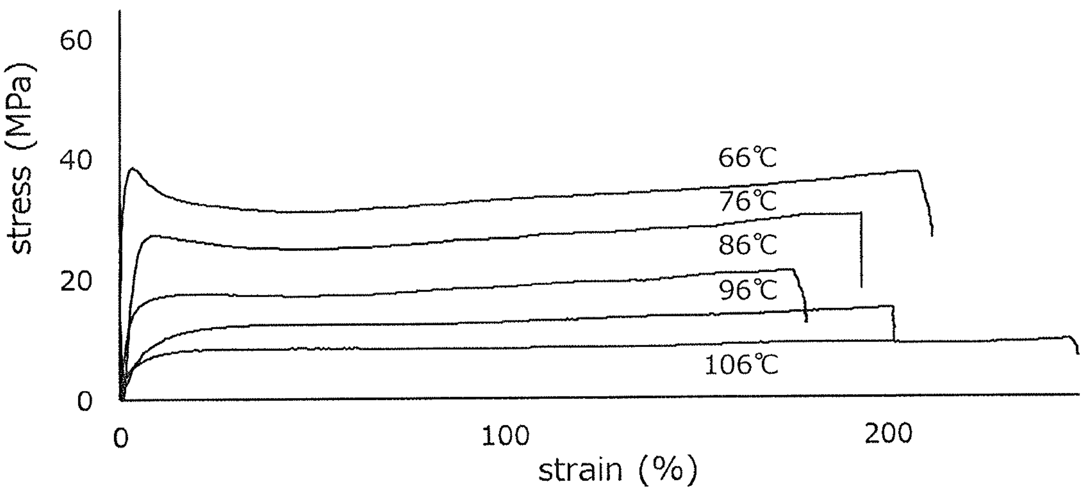
60
40
20
0
stress (MPa)
66℃
76℃
86℃
96℃
106℃
0
100
200
strain (%)

FIG.11

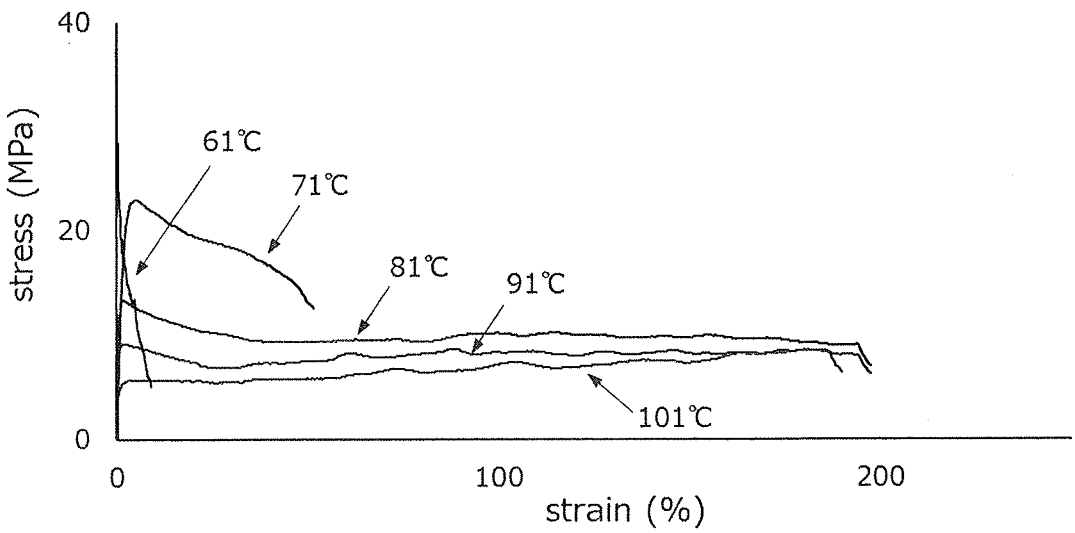
40
20
0
stress (MPa)
61℃
71℃
81℃
91℃
101℃
0
100
200
strain (%)

FIG.12

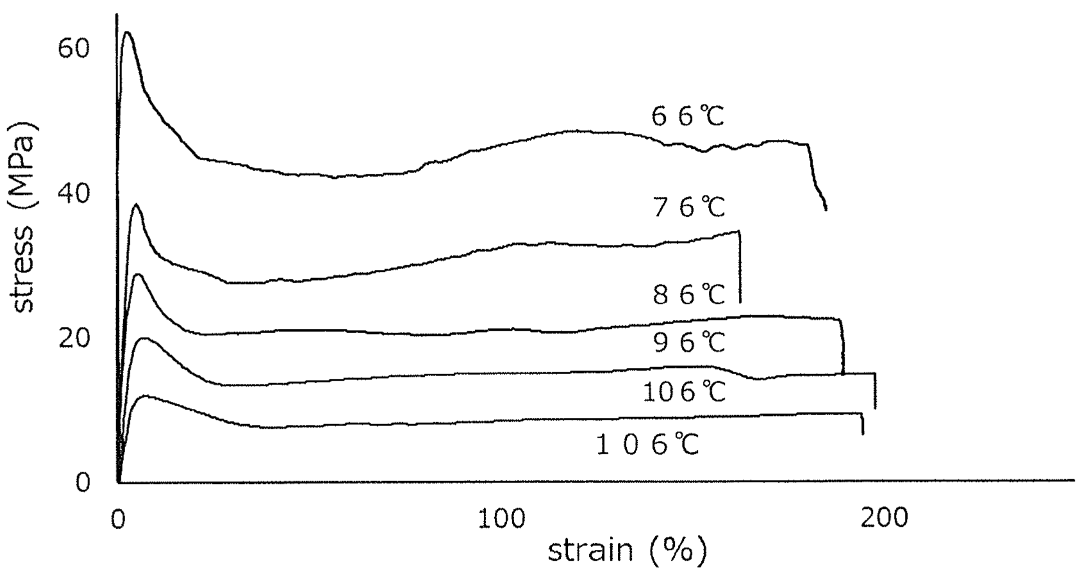
60
40
20
0
stress (MPa)
6 6℃
7 6℃
8 6℃
9 6℃
10 6℃
1 0 6℃
0
100
200
strain (%)

FIG.13

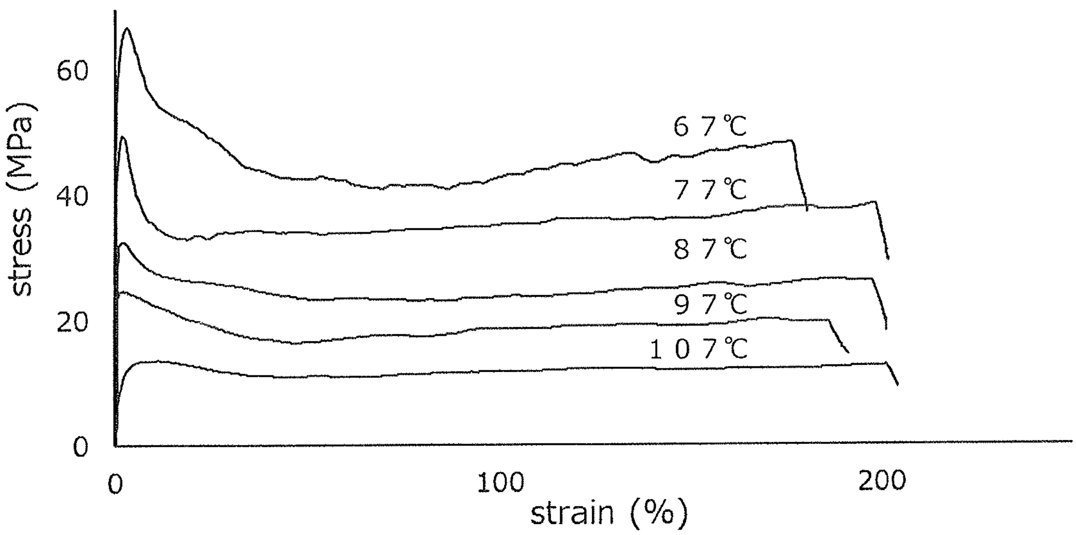

**INTERNATIONAL SEARCH REPORT**

International application No.
**PCT/JP2022/043253**

**A. CLASSIFICATION OF SUBJECT MATTER**

***C08F 216/06***(2006.01)i; ***C08F 8/12***(2006.01)i; ***C08L 101/16***(2006.01)i
FI: C08F216/06; C08L101/16; C08F8/12 ZBP

According to International Patent Classification (IPC) or to both national classification and IPC

**B. FIELDS SEARCHED**

Minimum documentation searched (classification system followed by classification symbols)

C08F; C08L

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2015-034262 A (KURARAY CO) 19 February 2015 (2015-02-19)<br>claims, paragraph [0069], examples | 1-6 |
| Y | WO 2021/215501 A1 (KURARAY CO) 28 October 2021 (2021-10-28)<br>claims, paragraph [0019] | 1-6 |
| Y | JP 2003-320600 A (KURARAY CO) 11 November 2003 (2003-11-11)<br>claims, paragraph [0105], examples | 1-6 |
| Y | JP 2016-69481 A (NIPPON SYNTHETIC CHEM IND CO LTD) 09 May 2016 (2016-05-09)<br>claims, paragraphs [0010], [0053], [0057], example 1 | 1-6 |
| Y | JP 9-71620 A (KURARAY CO) 18 March 1997 (1997-03-18)<br>claims, paragraphs [0001], [0019], [0026], [0028], [0029], [0034], example 3 | 1-6 |
| Y | WO 2017/082063 A1 (NIPPON SYNTHETIC CHEM IND CO LTD) 18 May 2017 (2017-05-18)<br>claims, paragraphs [0012], [0067] | 1-6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 January 2023** | **31 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/043253**

**C. DOCUMENTS CONSIDERED TO BE RELEVANT**

| Category* | Citation of document, with indication, where appropriate, of the relevant passages | Relevant to claim No. |
|---|---|---|
| Y | WO 2015/050221 A1 (KURARAY CO) 09 April 2015 (2015-04-09) claims, paragraphs [0042]-[0046] | 1-6 |
| Y | WO 2013/146961 A1 (KURARAY CO) 03 October 2013 (2013-10-03) claims, paragraphs [0043]-[0051] | 1-6 |

Form PCT/ISA/210 (second sheet) (January 2015)

**INTERNATIONAL SEARCH REPORT**
**Information on patent family members**

International application No.
**PCT/JP2022/043253**

| Patent document cited in search report | Publication date (day/month/year) | Patent family member(s) | Publication date (day/month/year) |
|---|---|---|---|
| JP 2015-034262 A | 19 February 2015 | (Family: none) | |
| WO 2021/215501 A1 | 28 October 2021 | (Family: none) | |
| JP 2003-320600 A | 11 November 2003 | US 2004/0096683 A1<br>claims, paragraph [0224], examples<br>EP 1403289 A1<br>CN 1464883 A<br>KR 10-0894024 B1 | |
| JP 2016-69481 A | 09 May 2016 | (Family: none) | |
| JP 9-71620 A | 18 March 1997 | EP 751153 A1<br>claims, p. 2, lines 3-13, p. 4, lines 8-23, p. 5, lines 7-32, p. 6, lines 1-5, example 3<br>US 5744547 A | |
| WO 2017/082063 A1 | 18 May 2017 | US 2018/0319965 A1<br>claims, paragraphs [0017], [0088], [0089]<br>EP 3375818 A1<br>CN 108291070 A<br>TW 201728605 A | |
| WO 2015/050221 A1 | 09 April 2015 | US 2016/0243746 A1<br>claims, paragraphs [0049]-[0054]<br>EP 3053840 A1<br>CN 105579350 A | |
| WO 2013/146961 A1 | 03 October 2013 | US 2015/0105508 A1<br>claims, paragraphs [0058]-[0070]<br>EP 2832787 A1<br>CN 104220518 A<br>TW 201343685 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018003884 A
- JP 2014034647 A


### Non-patent literature cited in the description


- *Material (Journal of the Society of Materials Science, Japan,* 2017, vol. 66, 23